# EUROPEAN PATENT APPLICATION

(11) **EP 4 506 040 A1**
(43) Date of publication of application: **12.02.2025**
(21) Application number: 23784715.7
(22) Date of filing: 31.03.2023
(51) Int. Cl.: A63B 31/00, A63B 69/12

(54) **PHYSICAL TRAINING METHOD AND TRAINING TOOL**

(30) Priority: 03.04.2022 JP 2022062189; 24.05.2022 JP 2022001712 U
(71) Applicant: Egao With Us Corporation Limited, Tokyo 150-0013 (JP); S-Sense Inc., Wako-shi, Saitama 351-0115 (JP); Patbrain Co. Ltd, Machida-shi, Tokyo 194-0021 (JP)
(72) Inventor: HANZAWA Shigeru, Tokyo 150-0013 (JP); HIRATA Eishi, Wako-shi, Saitama 351-0115 (JP); KATAOKA Toshimitsu, Machida-shi, Tokyo 194-0031 (JP)
(74) Representative: Rings, Rolf
(86) International application number: PCT/JP2023/013597
(87) International publication number: WO 2023/195428

(57) **Abstract**

A training method includes: a step of contracting a lateral abdominal muscle including a transverse abdominal muscle to pull in an abdominal periphery voluntarily by a trainee; a step of covering the abdominal periphery pulled in voluntarily by the trainee from an upper portion of a pelvis to a bottom of a tenth rib by tightly wrapping while stretching a training tool (6) in a longitudinal shape made of elastic foam having buoyant force, stretchability and flexibility; and a step of carrying out training while maintaining a state where the abdominal periphery is pulled in by shrinking force of the training tool (6).

## Description

### TECHNICAL FIELD

An object of this invention is to provide a swimming training method and a training tool for beginners in swimming with a wide variety of postures that help overcome the fear of drowning due to breathing difficulties and the like in water early and allows efficiently giving guidance on swimming to a large number of people.

### BACKGROUND ART

For the purpose of avoiding water accidents, it is desirable to spend enough time in physical education classes in elementary, middle, and high schools to teach swimming to pupils and students. However, the schools have difficulties because of the occurrence of various problems, such as a lack of class hours, a lack of teachers for swimming guidance, and disposal of aged school pools.

Many people who cannot swim end up receiving insufficient swimming guidance in a short time. Especially when they grow fear of having breathing difficulties in water and drowning, the fear will linger for their entire lives, never be forgotten, and turn into feelings of dislike and resistance toward swimming.

Under such a background, many teachers who give guidance on swimming worry about what and how they should conduct swimming classes efficiently in a short time and wonder if there is any guiding method that allows any people, regardless of whether they can hardly swim or can swim, to master basic swimming ability in classes in a limited time.

In beginners in swimming, since the strength of their abdominal muscles and back muscles is insufficient, it is difficult for them to maintain horizontal posture in the water by making the center of buoyancy location close to the center of gravity location depending on their own sense. In order to solve the difficulty, Patent Document 1 discloses a swimming training method and a swimmer information measurement device. In the swimming training method and the swimmer information measurement device, the center of gravity location of a swimmer, and the center of buoyancy location and buoyant force of the swimmer maintaining a streamlined gliding posture in a prone floating state in the water are measured and obtained as swimmer information, and on the basis of the swimmer information, a balancer giving buoyancy is attached to the body of the swimmer to thereby enable the difference between the center of gravity location and the center of buoyancy location to be adjusted.

A buoyant material called helper, which is fixed to a lower-back part with a string, makes it difficult to take breaths because one's head tends to sink when it is applied in front crawl. Because the buoyant material is attached to the body with a string, it slips or digs into the abdomen, which makes one feel uncomfortable and does not allow him/her to keep a preferable underwater posture. In order to solve the drawbacks, Patent Document 2 discloses a crawl swimming practice swimwear in which buoyant materials made of a plate-shaped foamed material with closed cells are used and attached to a swimwear such that the buoyant force of the buoyant material for lower body is greater than or equal to that of the buoyant material for upper body in consideration of the center of buoyancy of a wearer.

Novices in swimming tend to fall into a problem that "when a novice receives rotational force generated by buoyant force and gravity in water, the pelvis 3 rotates around a line connecting points of the right and left anterior superior iliac spines, and the novice tends to take a posture with the pelvis 3 tilted rearward and the leg and lower-back portion sinking." In order to improve the problem, Patent Document 3 discloses that a buoyant material is arranged at a position that cause rotational moment to act in a direction for tilting the pelvis 3 forward centering around the line connecting the right and left anterior superior iliac spines of the pelvis 3 in a prone position in the water, thereby making it easier for even novices in swimming to maintain streamline with a pelvis 3 tilted forward.

When a person who cannot swim well uses a floating tool to try to practice swimming, the floating tool does not allow free movement of both hands. If the person tries to move both hands and both arms freely, he/she cannot use the floating tool, and if the person tries to rely on the floating tool, he/she cannot move his/her hands. In order to solve the problems, Patent Document 4 discloses a belt with floats in which measures are taken by attaching floats as buoyant bodies of a floating tool to a wide belt such that the floats are positioned on the front face and back face of one's body waist part and winding around a constriction of the body waist part.

Patent Document 5 discloses a swimming flotation pad for practice as a swimming pad for practice for elderly people, beginners, and people with disabilities. In the swimming flotation pad for practice, a wide rubber band portion is placed in the center of a rectangular flotation pad portion with four rounded corners formed in a gently curved U-shape corresponding to a human trunk, and the rubber band portion is alternately and repeatedly inserted into outer slits of the flotation pad portion and integrated with hook-and-loop fastener portions at both ends.

Patent Document 6 discloses a supporter in which gas is injected into an expansion portion housed in a housing portion to increase volume, the abdomen of a wearer is pressed from a front to a rear upper side, repulsion force is exerted on the rectus abdominis muscle located in the preabdomen, and contractile force is exerted on inner muscles of the abdomen (in particular, transverse abdominal muscles and abdominal internal oblique muscles) connected to the rectus abdominis muscle. The supporter allows the wearer to train the inner muscles at the lower-back portion, ensures a preventive effect of backache for the wearer, improves the stability of the wearer's lumbar spine, and allows a wearer having backache to obtain a pain relief effect.

Patent Document 7 discloses an underwater training belt that includes a first strip-shaped member, a second strip-shaped member, a gas bag, a buckle, a first hook-and-loop fastener, and a second hook-and-loop fastener to apply a predetermined applied pressure to a specific part of the limbs of a user in water to restrict bloodstream to the user's muscles without stopping the bloodstream for the purpose of training for the muscles. The first strip-shaped member having stretchability is configured to be wound around the specific part. The second strip-shaped member is connected to one end portion of the first strip-shaped member. The gas bag is arranged inside the first strip-shaped member and has a specific length corresponding to a length around the specific part. The buckle is connected to the other end portion of the first strip-shaped member. The first hook-and-loop fastener is provided in at least one part on a surface of the first strip-shaped member. The second hook-and-loop fastener is provided on an approximately whole of a surface of the second strip-shaped member.

Patent Document 8 discloses a training method for strengthening muscles around the rib cage. In the training method, an extendable training band that has a rectangular shape and has a length in a longitudinal direction covering an upper portion of the abdomen to the chest is prepared and wound around and secured to the rib cage in a state where the stretched training band covers the rib cage from the upper portion of the abdomen so as to be able to apply load, and breathing is performed so as to counter the load of the training band that covers the upper portion of the abdomen to the rib cage.

Patent Document 1: Japanese Patent No. 5801795
Patent Document 2: Japanese Patent No. 5855347
Patent Document 3: Japanese Patent No. 5977184
Patent Document 4: JP-A-2002-65894
Patent Document 5: Japanese Registered Utility Model No. 3231436
Patent Document 6: JP-A-2013-094336
Patent Document 7: Domestic Re-publication of WO2018-092202
Patent Document 8: Japanese Patent No. 6377874

Non-patent Document 1: Hirotoshi Ifuku, et al., "Characteristics of standing posture in the elementary school upper grades," Memoirs of the Faculty of Education, Kumamoto University, No. 66, 267-272, 2017
Non-patent Document 2: Naoki Yoshida, et al., "Efficient swimming involves movement of internal organs to head side," Tohoku University Graduate School of Medicine, Tohoku University Hospital, Press Release material, December 17, 2020
Non-patent Document 3: Shinichiro Moriyama, et al., "Effects of voluntary abdominal bracing and hollowing maneuvers during gliding and swimming on performance," research result report of Grants-in-Aid for Scientific Research, Institution No. 12604, Project No. 15K16466, June 4, 2018

### DISCLOSURE OF THE INVENTION

### PROBLEMS TO BE SOLVED BY THE INVENTION

It cannot be said that any of Patent Document 1 to Patent Document 8 and Non-patent Document 1 to Non-patent Document 3 recognizes and solves essential problems necessary for beginners in swimming who cannot swim to overcome their fear from breathing difficulties and the like in water early and efficiently master swimming.

In the swimming training method disclosed in Patent Document 1, information on a swimmer is obtained each time the kind and attaching position of a balancer is changed, a condition that causes the center of gravity location and the center of buoyancy location to come close to one another on a vertical line is found out, the balancer close to this condition is attached to the swimmer, and then, the swimmer repeats swimming practice. This allows the swimmer to learn the sense of balance and keep the balance in the horizontal posture even after the balancer is removed. Patent Document 1 describes that the swimming training method is similar to a case where a person who cannot ride a bicycle learns the balance of an equilibrium sense with a bicycle having an auxiliary wheel and becomes able to ride a bicycle without an auxiliary wheel.

However, this is only a story applicable to training on land and does not apply to training in water. In a special environment such as in the water, many beginners in swimming nearly drown, for example, by suffering from being unable to breathe in the water or suffering from drinking a large amount of water, and develop fear. It is not easy to overcome the fear of drowning in the water. Not being able to breathe directly affects one's life. Therefore, the fear is incomparably more difficult than the anxiety felt by not achieving a balance by removing the auxiliary wheel on land in bicycle riding and cannot be easily overcome.

Especially, when the balancer giving buoyant force is suddenly removed, the possibility of being unable to breathe, drinking water, and nearly drowning is extremely large. The suffering from this failure becomes fear, which swirls around in the heads of beginners in swimming. When the fear comes into their heads, their bodies go rigid and cannot be moved freely, and swimming training can no longer be carried out.

Accordingly, in swimming training, how the fear of drowning is overcome is a problem. However, in Patent Document 1, the existence of the problem of breathing difficulties unique to an underwater situation is not recognized, and its solution is not disclosed at all.

Furthermore, many pupils and students develop physical abnormalities as reported in Non-patent Document 1. Non-patent Document 1 reports that "recently, a decline in children's physical fitness has been significant, and a serious polarizing trend has arisen between active and physically fit children and inactive and physically weak children. Disturbed postures are noticeable, and bad postures result in an imbalance in the body and the emergence of physical and mental disorders. In particular, at school sites, adverse effects, such as pupils and students being restless, unable to concentrate on classes, unable to sit on their chairs for a long time, and failing to achieve good results in academic performance and sports club activities, are significant. Therefore, they have become important problems to be solved."

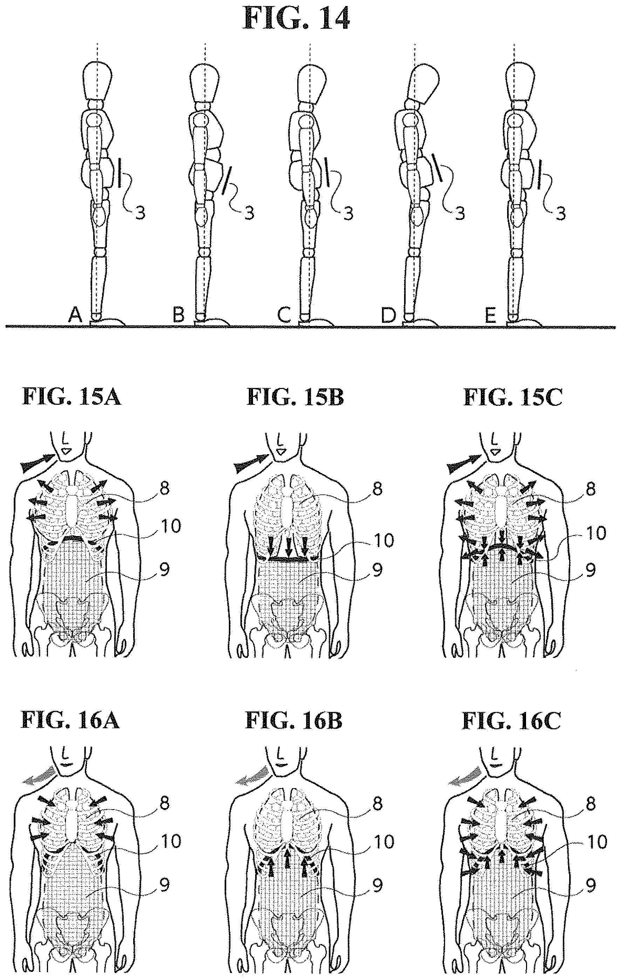

Specifically, many pupils and students develop abnormalities in a pelvis posture fundamental to swimming training. According to the method by Kendall, et al. (2006) as illustrated in Fig. 14, measurement has been performed to see how many people fell into which category of five categories of standing postures. The five categories of standing postures include A. ideal type, B. kyphosis-lordosis type (pelvis tilted forward), C. flat-back type (pelvis tilted rearward slightly), D. kyphosis-flat type (pelvis tilted rearward), and E. military type (pelvis tilted forward). The result reports that "of 196 people, only 44 people (22%) have good postures with the ideal type and the military type together, and the kyphosis-lordosis type, the flat-back type, and the kyphosis-flat type that are referred to as bad postures account for 152 people (78%)." It is very difficult to provide swimming training to many pupils and students having abnormal postures in the method disclosed in Patent Document 1 in terms of time and cost.

This is because it is not easy to measure the center of gravity location of the pupils and students having bad postures, and the center of buoyancy location and buoyant force of a swimmer maintaining a streamlined gliding posture in a prone floating state in the water. Even if a detachable balancer having buoyant force is attached to the swimmer's body on the basis of the swimmer information measured and obtained to thereby enable the difference between the center of gravity location and the center of buoyancy location to be adjusted, more time is required. Besides, it is absolutely unfeasible to prepare balancers individually.

The description of effects provided when the crawl swimming practice swimwear disclosed in Patent Document 2 is worn is that "the body spontaneously floats with the center of buoyancy as a reference point, making it easier to keep a generally horizontal and symmetrical correct underwater posture." However, on the line below the description, a description that denies the effects is also provided. It describes that "when buoyant materials are arranged on the chest and the back, the body tends to turn (roll), making it difficult to keep the correct underwater posture." This indicates that there are drawbacks in that the effects vary depending on the attaching position of the buoyant materials and that, similarly to Patent Document 1, it is impossible to sufficiently respond to each of a multitude of pupils and students having different centers of buoyancy and centers of gravity.

However, in EFFECTS OF THE INVENTION, it is only described as follows. "When seven people who were unable to swim wore the swimwear of the present invention and practiced front crawl, five people became able to swim by front crawl for 25 m or more on the seventh day (two days a week × one hour practice). Among them, two people were able to swim for 50 m or more in a state of removing the buoyant materials. It is said that the period to master front crawl (swimming the whole distance of 25 m) is generally an average of about 20 months (one to two days a week × about one hour practice) in a swimming club. Compared with it, it is clear that it can be mastered in an extremely short period." Since it does not at all explain why the two people became able to swim in the state of removing the buoyant materials, it is doubtful if there are effects, and the other five people still remain unable to swim.

Furthermore, it is described as follows. "It is preferable to give guidance to decrease the buoyant force of the buoyant materials 14, 16, for example, by replacing a thick (t = 15 mm) buoyant material with a thin (t = 10 mm) one, when improvement is made to some extent, and to remove the buoyant materials 14, 16 when front crawl is completely mastered. More specifically, first, buoyant materials having a thickness of t = 15 mm (buoyant force: 0.41 kg×2 for upper body, 0.45 kg×2 for lower body) are used, and then, buoyant materials having a thickness of t = 10 mm (buoyant force: 0.27 kg×2 for upper body, 0.3 kg×2 for lower body) are used. The purpose of the guidance is to be able to swim without buoyant materials in the end, and the mechanism is to guide people to became able to swim in phases by decreasing the buoyant materials." However, in this guiding method, buoyant materials having different thicknesses should be prepared corresponding to the number of pupils and students to give guidance. It is absolutely unfeasible to give guidance to appropriately remove and replace the buoyant materials according to the swimming ability, body shape, pelvis tilted forward, pelvis tilted rearward, and the like of each of a multitude of pupils and students.

The swimwear disclosed in Patent Document 3 causes rotational moment in a forward tilt direction to directly act on the pelvis in water by a buoyant material to enable novices in swimming to master streamline with the pelvis tilted forward. However as illustrated in Fig. 14, human postures and tilts of the backbone and pelvis are of great variety, and there are at least five patterns. For people who originally have pelvis tilted forward, it is unpreferable to simply tilt only the pelvis forward because it results in swayback. Moreover, it is a swimwear that relies on a buoyant material. Therefore, when this swimwear is not worn, the fear of sinking in the water cannot be overcome, and the body goes rigid due to unnecessary force developing in the body, causing the lower body to sink. It is impossible to master even a basic motion of streamline.

Note that it is described as follows. "The buoyant material may be in a detachable form using a housing portion, a locking tool, and the like. Accordingly, the conditions of buoyant force can be appropriately set in accordance with the practice and purpose. In addition, even when progress is made so as to be able to maintain the streamline, the swimwear can be used as is by removing the buoyant material." However, this only mentions the swimwear, and how to become able to swim without the swimwear is not mentioned at all.

The belt with floats disclosed in Patent Document 4 is worn with the floats coming in close contact with the constriction portion between a lower portion of the sternum and an upper portion of the pelvis. Therefore, the belt with floats has an advantage in allowing people with disabilities to use both hands more often than a case of using a flutterboard of floating tube. However, similarly to the balancer disclosed in Patent Document 1, Patent Document 4 does not at all describe how to be able to float, breathe, and swim in a state without the floats after removing the floats.

In Patent Document 5, as a swimming pad for practice for elderly people, beginners, and people with disabilities, a rectangular flotation pad with four rounded corners formed in a gently curved U-shape corresponding to a human trunk is used. However, this also has similar problems to Patent Document 1 to Patent Document 4 and does not at all describe how to be able to float, breathe, and swim after overcoming fear in the water when the flotation pad is removed.

The supporter described in Patent Document 6 is used entirely on land as described such that it allows a wearer to train his/her abdominal muscles and ensures a preventive effect of backache for the wearer. No mention is made on use in water and a breathing method specific to swimming. Moreover, it is described that the supporter efficiently presses down on the abdomen of the wearer by restraining an expansion portion from bulging forward against the abdomen of the wearer by a plate-shaped support portion that bulges the expansion portion to the abdomen side of the wearer in association with gas injection into the expansion portion. As is evident from the description, since the support portion restricts the movement of the trunk, the supporter is not at all appropriate for exercises, such as swimming, in which the body is freely moved in the water, the belly is pulled in and inflected like butterfly, and the arms and legs are reciprocated, and the posture is flexibly changed.

The underwater muscle training belt disclosed in Patent Document 7 is referred to as a belt optimal for pressurizing muscular strength training in water. However, while it is useful to train muscles by applying a predetermined applied pressure to a specific part of the arms or legs in a stationary state in the water, it is inappropriate for swimming. Since swimming is an exercise in which the trunk is bent and stretched, the arms and legs are reciprocated, and the posture is flexibly changed, it is impossible to swim if they are fixed. Moreover, the problem of not drowning specific to swimming is not at all mentioned.

The training method disclosed in Patent Document 8 can exhibit a posture improvement effect, a body core training effect, and a performance improvement effect in various sports. However, a band used for the training is only described as being formed from a material having stretchability, and no description is made on the use in swimming or in water. The training method is not one that helps overcoming the fear due to breathing difficulties and the like in the water early and allows a large number of people to efficiently master swimming.

In breathing in swimming, such a breathing method unique to swimming illustrated in Fig. 15C and Fig. 16C (hereinafter referred to as swimming breathing) as has both thoracic breathing illustrated in Fig. 15A and Fig. 16A and abdominal breathing illustrated in Fig. 15B and Fig. 16B on land together is performed. In particular, in swimming training carried out in the water, such as a pool, for carrying out the swimming breathing training, when a breath is taken in with the mouth and the nose out of a water surface, the external intercostal muscles, accessory breathing muscles, and a diaphragm 10 are caused to act as muscles. In contrast to this, muscles acting when a breath is taken out with the mouth and the nose submerged in the water are the internal intercostal muscles and the abdominal muscles. The action of the abdominal muscles is larger.

It is not easy to take time to have beginners in swimming learn such swimming breathing different from the way of ordinary breathing and unique to an underwater situation. On top of that, further teaching the training method disclosed in Patent Document 8 different from this swimming breathing makes the beginners in swimming confused, not knowing what kind of breathing they should possibly do, and it is absolutely difficult for them to master swimming.

It cannot be said that any of Patent Document 1 to Patent Document 8 and Non-patent Document 1 to Non-patent Document 3 described above disclose a swimming training method and a training tool for trainees as beginners in swimming with a wide variety of postures typified by the five postures illustrated in Fig. 14 that help overcome the fear of drowning due to breathing difficulties and the like in water early and allows a large number of people to efficiently master swimming.

In order to teach swimming efficiently in a limited time and at a limited cost, first, the most important thing is to decrease fear, a feeling of dislike, a feeling of resistance against water to avoid near drowning in the water. In order to solve the problems and avoid near drowning, "it is better to have a training tool" having sufficient buoyant force. However, in order to become able to really swim in the water without relying on a training tool, "it is better not to have a training tool."

Thus, under the conflicting condition between "it is better to have a training tool" and "it is better not to have a training tool," it is necessary to solve a contradictory problem of giving guidance to become able to swim at minimum cost and time without causing the fear of drowning from being unable to breathe in the water. An object of this invention is to provide a swimming training method and a training tool that solve the fundamental problems of the conventional swimming training.

### SOLUTIONS TO THE PROBLEMS

In order to achieve the above objects, the present invention provides the following solutions. A training method according to the present invention includes: a step of contracting a lateral abdominal muscle including a transverse abdominal muscle to pull in an abdominal periphery voluntarily by a trainee; a step of covering the abdominal periphery pulled in voluntarily by the trainee from an upper portion of a pelvis to a bottom of a tenth rib by tightly wrapping while stretching a training tool in a longitudinal shape having stretchability and flexibility; and a step of carrying out training while maintaining a state where the abdominal periphery is pulled in by shrinking force of the training tool.

A training tool according to the present invention is in a longitudinal shape having stretchability and flexibility that tightly wraps around an abdominal periphery from an upper portion of a pelvis of a trainee to a bottom of a tenth rib. The training tool has contractile force for tightly wrapping around an abdominal circumferential portion of the trainee such that a length of the abdominal periphery when the training tool is worn around the abdominal periphery of the trainee is reduced by 3% to 20% from a length of the abdominal periphery of the trainee at rest who does not wear the training tool.

### EFFECTS OF THE INVENTION

As described above, according to the training method and the training tool according to the present invention, trainees as beginners in swimming who cannot swim, regardless of whether they are children or adults, are allowed to overcome the fear of drowning due to breathing difficulties in water early while maintaining a drawing-in state with the training tool, and the trainees are allowed to voluntarily control their heads and bodies to experience and learn drawing-in, a breathing method unique to swimming, and a streamline swimming style. Therefore, guidance on the training can be given to a large number of people efficiently in a short period.

As described above, according to the training tool according to the present invention, since any trainees, regardless of age or sex, become able to breathe in the water while maintaining the drawing-in state, they can overcome the fear of drowning due to breathing difficulties in the water early. Moreover, the trainees can voluntarily control their heads and bodies while adjusting tightening degree of the abdominal periphery by the training tool to be able to experience and learn the drawing-in, the breathing method unique to swimming, and the streamline swimming style. Furthermore, with the training tool according to the present invention, even only one swimming instructor can give guidance on swimming efficiently to a large number of trainees having different postures, body shapes, bodily weights, and subcutaneous fat, in a form of one person against many people, such that each should use the same training tool and adjust the drawing-in state after firmly confirming the tightening degree of the abdominal periphery by oneself to carry out swimming training.

### BRIEF DESCRIPTION OF THE DRAWINGS

Fig. 1 is an explanatory drawing of a training tool according to the present invention worn around an abdominal periphery of a trainee.
Fig. 2 is an explanatory drawing illustrating a relationship between a posture, a center of gravity, and a center of buoyancy of the trainee in water.
Fig. 3 is a breathing explanatory drawing in a state of performing drawing-in with the training tool worn.
Fig. 4 is a breathing explanatory drawing in a state of not performing drawing-in with the training tool worn.
Fig. 5 is a breathing explanatory drawing in a state of performing drawing-in without wearing the training tool.
Fig. 6 is a breathing explanatory drawing in a state of not performing drawing-in without wearing the training tool.
Fig. 7 is an explanatory drawing comparing a position from a water surface, tilt of the pelvis, and shapes of the lungs and digestive organs between the state of performing drawing-in with the training tool worn and the state of performing drawing-in without wearing the training tool.
Fig. 8 is a flowchart describing a relationship between the presence/absence of the training tool worn, each step of drawing-in, inhalation, and exhalation, and training locations.
Fig. 9 illustrates an external perspective view, front views, and a back view of a training tool composed of a three-layered structure.
Fig. 10 illustrates external perspective views, a front view, and a back view of a training tool composed of a two-layered structure.
Fig. 11 is an explanatory drawing describing a procedure of wearing the training tool having a three-layered structure.
Fig. 12 is an explanatory drawing describing a procedure of wearing the training tool having a two-layered structure.
Fig. 13 is an explanatory drawing illustrating a relationship between a load measurement value, an elongation amount, and tightening force in a tensile force cycle test of elastic foam.
Fig. 14 is an explanatory drawing illustrating posture classifications by a method by Kendall, et al.
Figs. 15A to 15C are explanatory drawings illustrating respective inhalation states of thoracic breathing, abdominal breathing, and swimming breathing.
Figs. 16A to 16C are explanatory drawings illustrating respective exhalation states of thoracic breathing, abdominal breathing, and swimming breathing.

### DESCRIPTION OF PREFERRED EMBODIMENTS

The following describes a training method and a training tool used for the training method according to the present invention using the drawings. Note that this is only an example, and the technical scope of the present invention is not limited to this.

As described in Non-patent Document 3, for a trainee 1, the effects of drawing-in cannot be expected. This applicant analyzed the behavior and mind state of the trainee 1 in water for the reason and enabled the trainee 1 to sufficiently recognize and be aware of a motion of performing drawing-in and voluntarily perform it.

In the present invention, a motion of contracting collateral muscles including transverse abdominal muscles 7 to pull in an abdominal periphery 2 voluntarily and consciously (hereinafter referred to as drawing-in) by the trainee 1 as a beginner in swimming enables digestive organs 9 to move to a head side and the center of gravity to also move to the head side by allowing the lateral abdominal muscles including the transverse abdominal muscles 7 to act as a corset that tightens the digestive organs 9, such as the stomach, small intestine, and large intestine as internal organs and by contracting these lateral abdominal muscles. Furthermore, the drawing-in motion causes the diaphragm 10 to rise to the head side by pulling in the abdomen. When air is inhaled throughout the lungs with consciousness as if the lower rib cage spreads to the right and left in this state, the lower rib cage spreads to the right and left, and the air is stored in a lower side (pelvis side) of lungs 8, enabling a position of the center of buoyancy to move to a leg side. Accordingly, the center of gravity and the center of buoyancy of the body come close to one another, making it easier to float horizontally in the water.

A breathing method performed in a state where drawing-in continues to be maintained is said to be difficult to master except for swimmers who have long practice time in the water, such as competitive swimmers. This is because breathing with the drawing-in state continuing to be maintained is unnatural breathing on land. However, in swimming as an exercise in the water, breathing performed in a state where a lot of air is in the lungs 8 allows obtaining larger buoyant force. Therefore, it works advantageously in the water and is preferred.

A difference between general breathing on land and swimming breathing in water will be described.

Breathing is performed not by the lungs 8 using its own strength to bulge and shrink but by activities of surrounding muscles. Typical muscles are the external intercostal muscles and the diaphragm 10, and thoracic breathing and abdominal breathing are performed in conjunction.

When air is inhaled in the general breathing on land, the external intercostal muscles contract, the thoracic cavity spreads, and the diaphragm 10 contracts to move to a pelvis 3 side, thereby taking (inhaling) air. When air is exhaled, the external intercostal muscles relax, the thoracic cavity narrows, and the diaphragm 10 relaxes to move to the head side, thereby discharging (exhaling) air.

In contrast to this, in the swimming breathing in water, in a state where the diaphragm 10 is moved to the head side by performing drawing-in, the external intercostal muscles contract, the thoracic cavity spreads, and air is taken (inhaled) without contracting the diaphragm 10 or moving the diaphragm 10 to the pelvis 3 side. The external intercostal muscles relax, the thoracic cavity narrows, and air is discharged (exhaled) without relaxing the diaphragm 10 or moving the diaphragm 10 to the head side. This is breathing that allows a lot of air to remain in the lungs 8 and results in large buoyant force.

Among beginners in swimming 1, infants and elementary school pupils cannot understand the difference between the thoracic breathing and the abdominal breathing as knowledge in many cases. It is considered that in these cases, the thoracic breathing and the abdominal breathing are often performed in conjunction at rest as a natural state. When guidance on drawing-in is given to children, having them pay attention to the breathing method causes them to pull in their abdomens unconsciously, and the drawing-in state is likely to change. Therefore, for children, it is important to teach the swimming breathing through repeated training so that they can reproduce the drawing-in state unconsciously as a natural state. This is not limited to children, and the same goes for adults.

By repeatedly training for drawing-in, the diaphragm 10 rises to the head side, and the floor muscle group of the pelvis 3 lifts up to the head side to stabilize the pelvis 3. When air is inhaled throughout the lungs 8 in this state, the lower rib cage spreads to the right and left, the air is stored in the lower side (pelvis 3 side) of the lungs 8, a position of the center of buoyancy moves slightly to the leg side, and the center of buoyancy and the center of gravity further come close to one another limitlessly by the buoyant force of a training tool 6.

Table 1 shows the results of actual measurements of a length of the abdominal periphery 2 centered on the navel of the trainee 1 for ten infants and elementary school pupils in a swimming school.

Table 1 shows the difference between the length of the abdominal periphery 2 in a standing posture as a natural state in everyday life and the length with drawing-in performed by age, gender difference, and height.

**[Table 1]**

| | Attribute | | | Abdominal periphery length centered on navel (cm) | | | |
|---|---|---|---|---|---|---|---|
| | Age | Sex | Body height (cm) | In normal time | In drawing-in | Difference | % |
| 1 | 6 years old | Female | 114 | 48.5 | 45.0 | 3.5 | 7.2 |
| 2 | 6 years old | Female | 124 | 56.0 | 48.0 | 8.0 | 16.7 |
| 3 | 7 years old | Female | 118 | 50.0 | 47.0 | 3.0 | 6.0 |
| 4 | 8 years old | Female | 119 | 49.0 | 44.0 | 4.0 | 9.1 |
| 5 | 8 years old | Female | 125 | 46.0 | 41.5 | 4.5 | 9.8 |
| 6 | 8 years old | Female | 129 | 53.0 | 48.0 | 5.0 | 9.4 |
| 7 | 8 years old | Male | 126 | 52.0 | 48.0 | 4.0 | 7.7 |
| 8 | 9 years old | Male | 133 | 53.5 | 51.5 | 2.0 | 3.9 |
| 9 | 9 years old | Male | 133 | 54.0 | 46.0 | 8.0 | 14.8 |
| 10 | 11 years old | Male | 147 | 54.0 | 48.0 | 6.0 | 11.1 |
| | | | | | Average | | 9.6 |

In the present invention, in order to allow beginners in swimming to become sufficiently aware of how important it is to perform drawing-in with their bodies, first, the beginners in swimming are allowed to voluntarily perform drawing-in and become aware of maintaining the drawing-in state. Afterwards, in order to eliminate room where the consciousness of thinking about drowning in the water enters, the training tool 6 in a longitudinal shape made of elastic foam having buoyant force, stretchability, and flexibility is worn on their bodies, allowing the bodies to perceive the training tool 6 as second transverse abdominal muscles and a second corset. In addition, the buoyant force of the training tool 6 causes the center of gravity and the center of buoyancy to come close to one another. Accordingly, concern about drowning has been eliminated.

Therefore, even when the beginners in swimming are no longer conscious of contracting the lateral abdominal muscles including the transverse abdominal muscles 7 shrinking force of the training tool 6 tightens the abdominal periphery 2, maintains the drawing-in state, and gives buoyant force to the bodies of the beginners in swimming. Accordingly, the concern about drowning is eliminated, enabling the beginners in swimming to breathe in the water slowly without any panic, and the above-described contradictory problem can be solved.

As a training tool used as the training method of the present invention, any materials, such as natural rubber and synthetic rubber, may be used as long as the training tool in a longitudinal shape is made of elastic foam having buoyant force, stretchability, and flexibility. However, as the elastic foam, a material which is made of chloroprene rubber containing air and used for what is called wet suits is preferred.

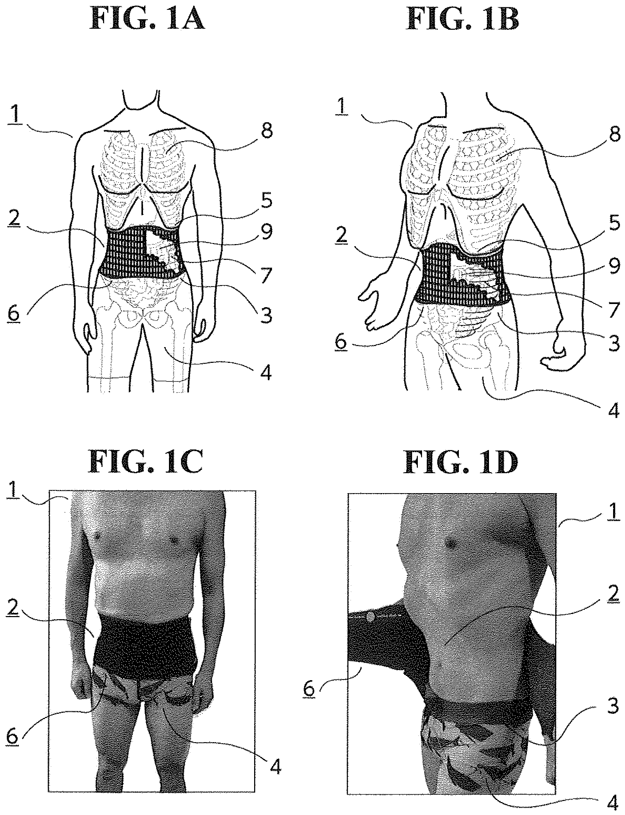

When swimming training is carried out as the training according to the present invention, first, as a first step, as illustrated in Fig. 1, a beginner in swimming as the trainee 1 voluntarily contracts the transverse abdominal muscles 7 and the like and pulls in the abdominal periphery 2 to perform drawing-in on land.

Next, as a second step, with the drawing-in state kept, the training tool 6 in a longitudinal shape made of elastic foam having buoyant force, stretchability, and flexibility is firmly tightened and worn on the body. The training tool 6 is worn around a part of the abdominal periphery 2 centered on the navel from a part on a swimwear 4 corresponding to the upper portion of the pelvis 3 to a bottom of tenth ribs 5 so as to be wrapped around the abdominal periphery 2 with the vicinity of the backbone of the back as a center while the training tool 6 is stretched by both hands.

As a third step, various training is carried out with the training tool 6 worn to cover the abdominal periphery 2 while the drawing-in state is kept.

Fig. 1A is a schematic diagram viewed from a front of the trainee 1. Fig. 1B is a schematic diagram viewed from a side of the trainee 1. Fig. 1C is a photograph viewed from the front of the trainee 1. Fig. 1D is a photograph when the trainee 1 is about to wear the training tool 6 around the abdominal periphery 2 in the drawing-in state where the abdominal periphery is pulled in. It is a feature of the present invention to include Step S1, Step S2, and Step S3, and they constitute the way of training using the training tool 6 according to the present invention. As illustrated in Fig. 1D, in Step S1, the transverse abdominal muscles 7 and the like are voluntarily contracted and the abdominal periphery 2 is pulled in to achieve the drawing-in state. In Step S2, with the abdominal periphery 2 in the drawing-in state kept, a part from the upper portion of the pelvis 3 to the bottom of the tenth ribs 5 is tightened and covered by wearing while stretching the training tool 6 in a longitudinal shape made of elastic foam having buoyant force, stretchability, and flexibility. In Step S3, training is carried out while the drawing-in state is maintained by the shrinking force of the training tool 6.

Therefore, the training tool 6 preferably has contractile force of the stretched training tool 6 attempting to shrink such that tightening force of the training tool 6 attempting to contract when the training tool 6 is pulled, stretched, and wrapped around the abdominal periphery 2 of the trainee 1 causes the length of the abdominal periphery 2 to be almost identical to the length in the drawing-in state even though the trainee 1 does not voluntarily perform drawing-in.

As a specific guide of the shrinking force, the training tool 6 preferably has the shrinking force such that the length of the abdominal periphery 2 of the trainee 1 pulled in by the shrinking force of the training tool 6 becomes 3% to 20% shorter than the length of the abdominal periphery 2 in a resting state.

The trainee 1 voluntarily puts the abdominal periphery 2 into the drawing-in state by contracting the lateral abdominal muscles including the transverse abdominal muscles 7, thereby enabling the trainee 1 to be aware of the drawing-in not only in his/her head but also by his/her whole body. Furthermore, by tightly tightening the abdominal periphery 2 with the training tool 6 and putting the abdominal periphery 2 into the drawing-in state, even though the trainee 1 forgets to perform drawing-in or becomes less conscious of performing it, the contractile force of the training tool 6 maintains the drawing-in state and gives buoyant force to the trainee 1, therefore restraining the body from sinking.

The trainee 1 voluntarily put the abdominal periphery 2 into the drawing-in state and further maintains the drawing-in state by wearing the training tool 6, thereby causing the digestive organs 9 in the body of the trainee 1 located on an inner side of the training tool 6 to move to the head side in whole.

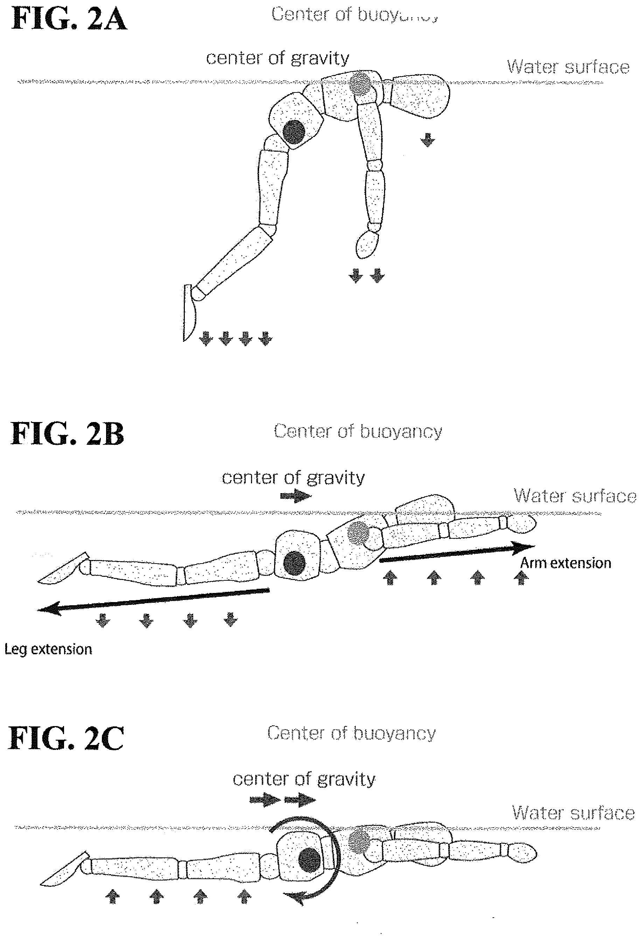

Next, a motion of the trainee 1 in water will be described using Fig. 2. Fig. 2A illustrates a state where the lungs 8 part floats by the air in the lungs 8, the center of buoyancy is located at the lungs 8 part, and his/her head, arms, and legs sink when the trainee 1 performs "prone floating" in a forceless state. The center of gravity is located near the pelvis 3.

However, many beginners in swimming do not enter such a forceless state because the fear of drowning in the water causes force to develop and their whole bodies to go rigid, making it hard to form prone floating. It is necessary for the beginners in swimming to first allow their whole bodies to perceive that the lungs 8 part floats in the forceless state.

A posture of Fig. 2B is an arm extension and leg extension state where the arms and legs are extended after the prone floating state of Fig. 2A is perceived. The posture causes the center of gravity to move in a head direction. From the posture, when the drawing-in is performed, the pelvis 3 tilts rearward, the digestive organs 9 move forward, and the center of gravity moves slightly in the head direction. This posture is a start state of a streamline swimming style of Fig. 2C.

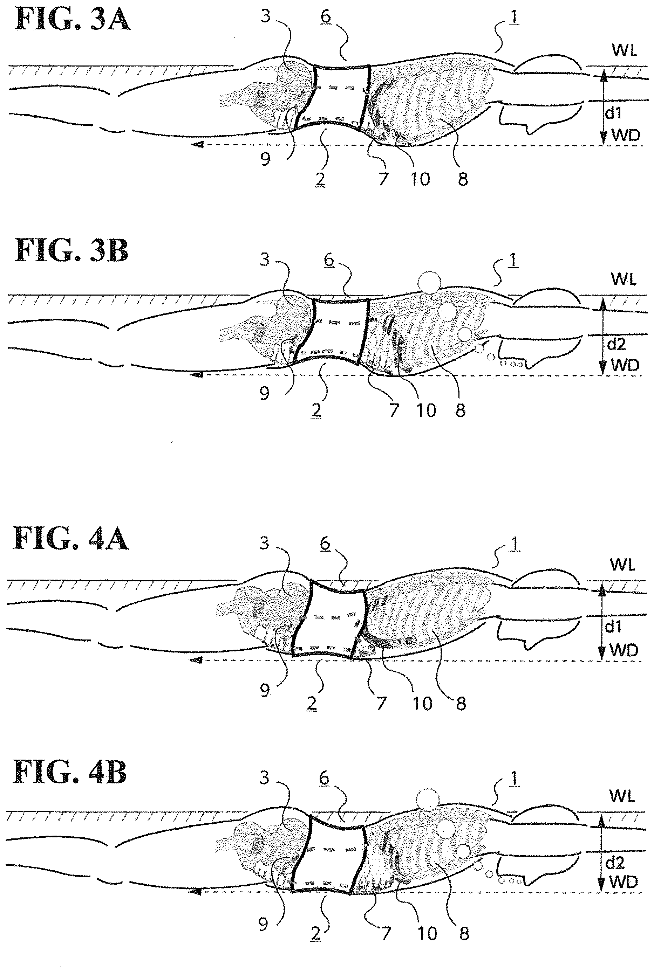

However, for a beginner in swimming 1, the fear of drowning due to being unable to breathe in the water causes his/her body to go rigid, causing labored force that loses balance of the body to be likely to act, and the beginner in swimming 1 needlessly struggles, suffers, exhausts physical strength, and drowns. Therefore, it is necessary for the trainee 1 as a beginner in swimming to carry out breathing training. **In** the breathing training, when air is inhaled throughout the lungs 8 in the drawing-in state with the training tool 6 worn around the abdominal periphery 2, the lower rib cage spreads to the right and left, and the air accumulates in the lower side (pelvis 3 side) of the lungs 8. Motion states of the trainee 1 in the posture of a streamline state in the water will be described using Fig. 3 to Fig. 7.

Fig. 3A illustrates a state of the lungs and the digestive organs 9 where, after wearing the training tool 6, performing drawing-in, and taking a breath in with his/her mouth and nose out of a water surface, the trainee 1 extends his/her arms and legs in the water, submerges the mouth and the nose, and holds his/her breath. Fig. 3B illustrates a state of the lungs and the digestive organs 9 where the arms and legs are extended in the water, drawing-in is performed, and a breath is taken out from the mouth. Since both are the drawing-in state, the pelvis 3 tilts rearward, and a part of each of his/her head, lungs, and lower-back comes out of a water surface WL. However, in the state of holding the breath with the mouth and the nose submerged in the water after taking a breath in with the mouth and the nose out of the water surface of Fig. 3A, the lungs 8 bulge, and the air in the lungs 8 and the buoyant force of the training tool 6 cause his/her whole body to float. The body floats such that a difference d1 between the water surface WL and a position WD in the state of Fig. 3A is shorter than a difference d2 between the water surface WL and the position WD in the state of taking a breath out in the water of Fig. 3B. The position WD is a tangent line of a surface of his/her chest near the tenth ribs 5 indicated by a dotted line. An abdomen side front surface of the training tool 6 is located on a body center side with respect to WD by the amount of the abdomen pulled in. The position of the digestive organs 9 in Fig. 3B moves more significantly to the head side. If the arms and legs can be slowly moved in this state, it is possible to move forward in the streamline swimming style.

Fig. 4A illustrates a state of the lungs 8 and the digestive organs 9 where, after wearing the training tool 6 and taking a breath in without performing drawing-in in the water, the trainee 1 holds his/her breath. Fig. 4B illustrates a state of the lungs 8 and the digestive organs 9 where the trainee 1 takes a breath out. In both, the abdominal periphery 2 is tightly wrapped around with the training tool 6. However, compared with the pelvis 3 when drawing-in is performed in Fig. 3, the pelvis 3 when drawing-in is performed in Fig. 4 tilts forward. The length of the abdominal periphery 2 becomes longer by the amount of not performing drawing-in. The abdominal periphery 2 slightly bulges by the action of the diaphragm 10 during inhalation and has an outer shape shriveling during exhalation more than during inhalation.

A part of each of the head, lungs, and lower-back comes out of the water surface WL. However, in the state after taking a breath in of Fig. 4A, the lungs 8 bulge more by inhaling air, and the air and the buoyant force of the training tool 6 cause the whole body to float. The body floats such that the difference d1 between the water surface WL and the position WD as the tangent line of the surface of the lungs 8 near the tenth ribs 5 indicated by the dotted line is shorter than the difference d2 between the water surface WL and the position WD in the state of taking a breath out of Fig. 4B. Since in both, the trainee 1 does not voluntarily perform drawing-in, the abdominal periphery 2 bulges, and in response to the bulge, the training tool 6 bulges because it has flexibility. The abdominal periphery 2 bulges to a position where the abdomen side front surface of the training tool 6 comes close to the position WD as the tangent line of the surface of the chest near the tenth ribs 5 indicated by the dotted line or a position exceeding the position WD. The digestive organs 9 move to the head side more by the volume of the lungs 8 shrinking in Fig. 4B.

Under both conditions of the case of performing drawing-in and the case of not performing drawing-in with the training tool 6 worn as illustrated in Fig. 3 and Fig. 4, the trainee 1 becomes able to effortlessly perform both taking a breath in with the mouth and the nose out of the water surface and taking a breath out from the mouth with the mouth and the nose submerged in the water. If breathing is laboring, the trainee 1 goes panics trying to take a breath in and sucks the water from the mouth and the nose into the lungs. When the fear of drowning in the water and the feeling of resistance against water disappear, the training transitions to a next step.

That is, tightening the abdominal periphery 2 by the shrinking force of the training tool 6 so as to achieve the drawing-in state is stopped, and tightening degree is gradually loosened. The trainee 1 attempts to see if it is possible to continue maintaining the drawing-in state by voluntarily contracting the transverse abdominal muscles 7 and the like even in the state where the tightening is loosened. If it is possible, the tightening is further loosened, and if it is impossible, retightening is performed. The trainee 1 repeats this, understands the relationship between the tightening degree of the training tool 6, the drawing-in state, and a floating degree of the body in the water in the head, and repeats the breathing training in the water so as to be able to sufficiently respond by the body.

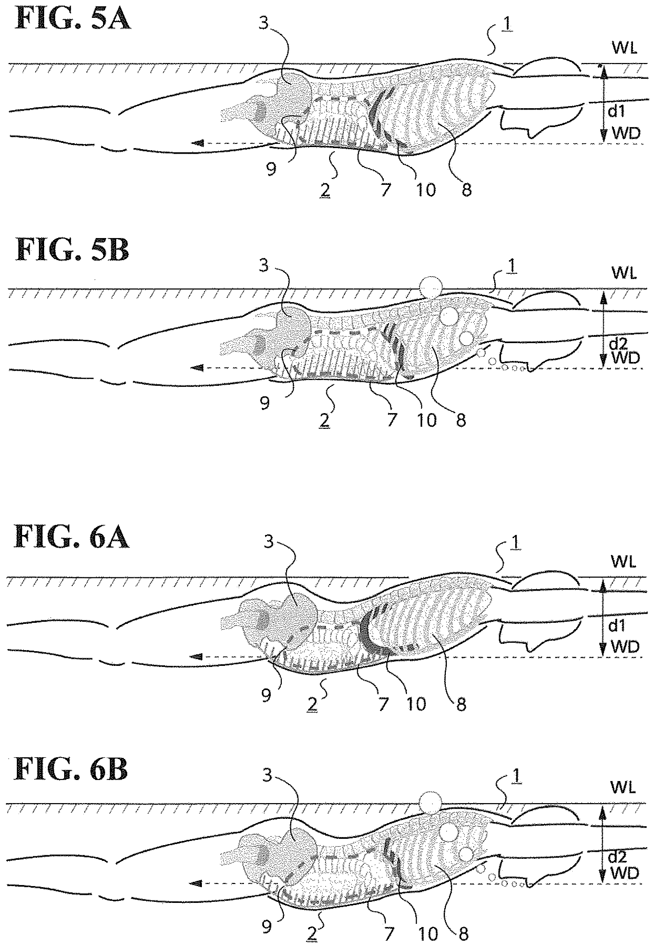

Once the trainee 1 becomes able to sufficiently breath in the water with the training tool 6 worn loosely, next, the trainee 1 performs drawing-in in the water without wearing the training tool 6. Fig. 5A illustrates a state of the lungs 8 and the digestive organs 9 where the trainee 1 holds his/her breath after taking a breath in with the mouth and the nose out of the water surface in the state of performing drawing-in in the water without wearing the training tool 6. Fig. 5B illustrates a state of the lungs 8 and the digestive organs 9 where the trainee 1 takes a breath out from the mouth in the water in this state. Since in both, the abdominal periphery 2 is not tightly wrapped around with the training tool 6, the buoyant force of the training tool 6 is not given to the trainee 1, and the body of the trainee 1 sinks into the water from the water surface WL for the amount. The buoyant force is determined according to the amount of air inhaled in the lungs 8.

The pelvis 3 is in the posture with rearward tilt kept although the pelvis 3 slightly tilts forward compared with the posture of the pelvis tilted rearward in the state of performing drawing-in of Fig. 3. The abdominal periphery 2 has a dimension slightly thicker than the state where the training tool 6 is worn around the abdominal periphery 2 and the drawing-in is not performed. Once the trainee 1 becomes able to sufficiently perform the state of inhalation of Fig. 5A and the state of exhalation of Fig. 5B by contracting the transverse abdominal muscles 7 voluntarily by the trainee 1 without the training tool 6 to achieve the drawing-in state as illustrated in Fig. 5, it can be said that the trainee 1 has learned so as to be able to perform drawing-in without the training tool 6 and overcome the fear of drowning in the water due to not having the training tool 6.

Fig. 6 illustrate a state where the trainee 1 breathes in the water without performing drawing-in without the training tool 6. Compared with the case of performing drawing-in without the training tool 6 in Fig 5, the abdominal periphery 2 bulges out downward with respect to the dotted line of WD in the water and the whole body further sinks into the water. When a breath is taken in, the lungs 8 bulge, giving the body buoyant force. However, as a breath is taken out, the lungs 8 shrivel, and the digestive organs 9 lower downward.

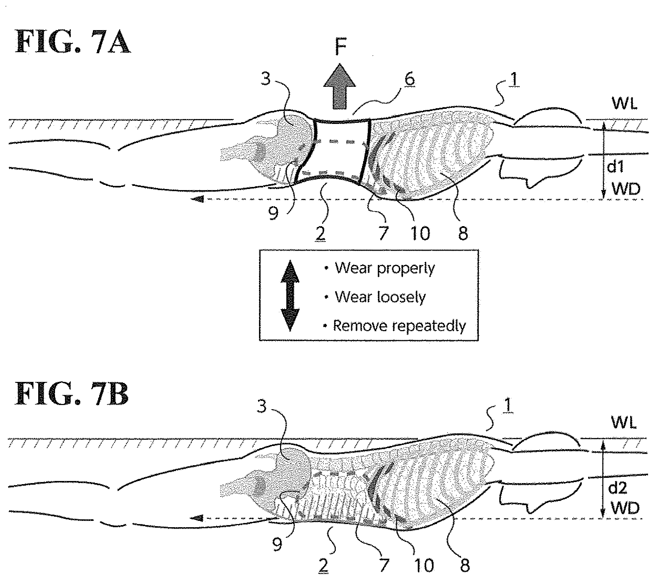

Fig. 7 is a drawing comparing a difference of a floating and sinking state of the body in the water when swimming training is carried out. The swimming training alternately repeats the state of performing drawing-in with the training tool 6 worn in Fig. 3A, the state of performing drawing-in with the worn training tool 6 loosened, and the state of performing drawing-in by removing and not wearing the training tool 6 in Fig. 5A. While all are in the drawing-in state, it is clear that the buoyant force of the training tool 6 is applied to the body, making it easier to float in the case of wearing the training tool 6.

From Fig. 7, the difference of each of the case where the training tool 6 is firmly wrapped and tightened around the abdominal periphery 2, the case where the tightening of the abdominal periphery 2 by the training tool 6 is loosened, and the case where the training tool 6 is removed from the abdominal periphery 2 is experienced by the whole body. Consequently, it is possible to experience by the whole body and understand in the head the difference between the way of feeling the buoyant force when the transverse abdominal muscles 7 acting as a corset is contracted and the abdomen is pulled in to achieve the drawing-in state voluntarily by concentrating consciousness and the way of feeling the buoyant force when the training tool 6 is worn around the abdominal periphery 2, the training tool 6 acts as a second corset to collaborate with the transverse abdominal muscles 7, and the abdominal periphery 2 is pulled in to achieve the drawing-in state.

Further, by experiencing the drawing-in state, a non-drawing-in state, and inhalation and exhalation in each state by the body, floating in the water, achieving a balance of the body in the water, and what would happen when the arms and legs are moved in the water are learned by the body and understood in the head. By repeatedly carrying out training for learning by the body and understanding in the head, it is possible to surely learn them.

Accordingly, with the room where the fear of drowning in the water comes into the head eliminated, the trainee 1 becomes able to voluntarily contract the lateral abdominal muscles including the transverse abdominal muscles 7 to freely perform drawing-in, can carry out training for the streamline swimming style slowly and calmly by performing drawing-in and a streamlined gliding, and floating with the center of buoyancy and the center of gravity brought close to one another, and becomes able to swim confidently.

Even though the trainee 1 gets exhausted with the training and loses his/her concentration on drawing-in, the drawing-in state is maintained because the training tool 6 tightens the abdominal periphery 2. In addition, the feel of the training tool 6 tightening the abdominal periphery 2 is felt by the body, offering a promising synergistic effect that reminds the trainee 1 of performing drawing-in again and concentrating consciousness to contract the transverse abdominal muscles 7.

Furthermore, the training tool 6 covers the abdominal periphery 2 centered on the navel from the upper portion of the pelvis 3 and strongly tightens the abdominal periphery 2 until the drawing-in state is achieved. Therefore, the training tool 6 acts as a corset that corrects the postures of a multitude of pupils and students having bad postures as described in Non-patent Document 1, thus being helpful in not only progress in swimming but also correction of postures. This is not limited to pupils and students, and the same goes for adults.

### EXAMPLES

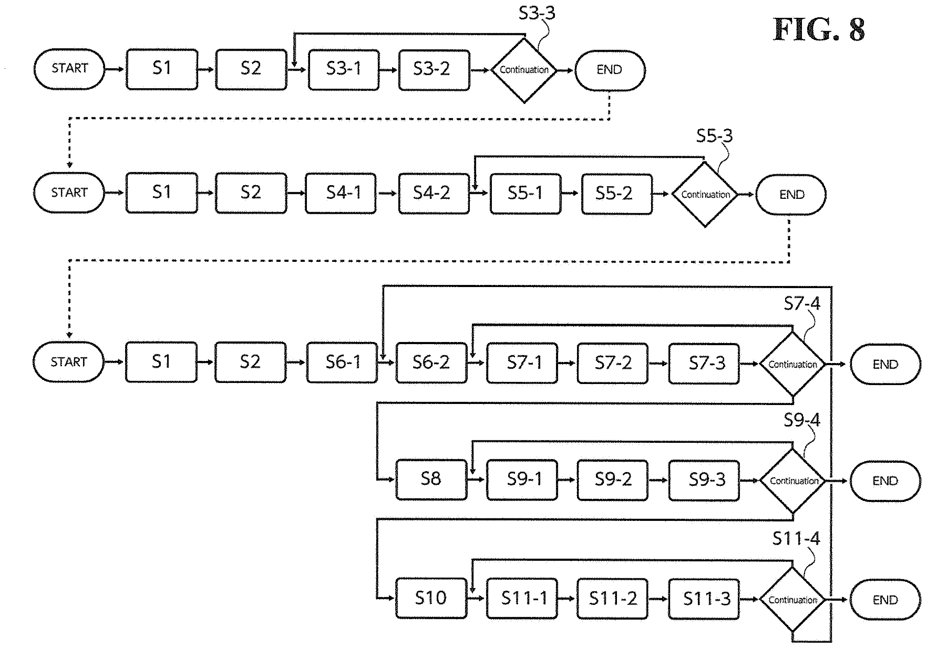

Fig. 8 is a drawing illustrating locations where the training according to the present invention is carried out and steps of each training as an example, which is a flowchart describing a relationship between the training locations, the presence/absence of the training tool worn, and each step of drawing-in, inhalation, and exhalation.

Fig. 8A illustrates a case where training is carried out on land, such as a poolside, classroom, and home. The training starts from START and includes Step S1, Step S2, and Step S3. In Step S1, the trainee 1 voluntarily contracts the transverse abdominal muscles 7 and the like and pulls in the abdominal periphery 2. In Step S2, the trainee 1 tightens and covers the abdominal periphery 2 voluntarily pulled in from the upper portion of the pelvis 3 to the bottom of the tenth ribs 5 while stretching the training tool 6 in a longitudinal shape made of elastic foam having buoyant force, stretchability, and flexibility. In Step S3, the trainee 1 carries out training while maintaining the state where the abdominal periphery 2 is pulled in by the shrinking force of the training tool 6.

The sequence of Step S1 and Step S2 may be reversed. Basically, it is only necessary for the trainee 1 to voluntarily contract the lateral abdominal muscles including the transverse abdominal muscles 7, pull in the abdominal periphery 2 roughly centered on the navel, tighten abdominal periphery 2 pulled in while stretching the training tool 6 around it, and fix the training tool 6 with hook-and-loop fasteners before performing Step S3. Next, training for breathing in the drawing-in state is carried out. Step S3-1 of taking a breath in and Step S3-2 of taking a breath out from the nose are continuously performed for a required number of times. The sequence may also be reversed. Performing them for the required number of times concludes the training, leading to END.

The training of Fig. 8A composed of the drawing-in step, the step of wrapping around and tightening the abdominal periphery 2 with the training tool 6, and a step of breathing training carried out while maintaining the drawing-in state by wrapping around and tightening the abdominal periphery 2 with the training tool 6 can be carried out on land. The training is basic training that can be practiced at any time in a small space and not constrained by time or location. Accordingly, unlike conventional swimming training in swimming classes only for a period during which a swimming pool can be used, the problem of absolute lack of time for carrying out the basic drawing-in and breathing training can be solved.

After the basic training on land of Fig. 8A ends, breathing training S5-1 and S5-2 during drawing-in of Fig. 8B is carried out. The training starts from START, and Step S1 and Step S2 are the same as those of Fig. . In Step S1, the trainee 1 voluntarily contracts the transverse abdominal muscles 7 and the like and pulls in the abdominal periphery 2. In Step S2, the trainee 1 covers the abdominal periphery 2 voluntarily pulled in from the upper portion of the pelvis 3 to the bottom of the tenth ribs 5 by tightly wrapping while stretching the training tool 6 in a longitudinal shape made of elastic foam having buoyant force, stretchability, and flexibility to wear it.

Unlike Fig. 8A, in Fig. 8B, Step S4-1, Step S4-2, and training for breathing in the drawing-in state are carried out. In Step S4-1, the trainee 1 gets in a bathtub with water or hot water in it at home or in a public bath. In Step S4-2, the trainee 1 retightens the training tool 6 in the water while receiving water pressure in the bathtub. Afterwards, in the training for breathing, the trainee 1 carries out training in the drawing-in state while receiving water pressure in the bathtub. Step S5-1 of taking a breath in with his/her face out of the water surface and Step S5-2 of taking a breath out from the nose in the water are continuously performed for a required number of times (S5-3). The sequence may be reversed. Performing Step S5-3 for the required number of times concludes the training, leading to END.

Since this training can be practiced at any time even at home, unlike conventional swimming training in swimming classes only for a period during which a swimming pool can be used, the problem of absolute lack of time for carrying out the basic drawing-in and breathing training can be solved.

Unlike Figs. 8A and 8B, Fig. 8C is different in that a pool is used for swimming training in school swimming classes or at a swimming school to carry out training up to the streamline swimming style.

Step S6-1, Step S6-2, and training for breathing in the drawing-in state are carried out. In Step S6-1, the trainee 1 gets in a swimming pool. In Step S6-2, the trainee 1 retightens the training tool 6 in the water while receiving water pressure in the pool. Afterwards, in the training for breathing, the trainee 1 carries out training in the drawing-in state while receiving water pressure in the bathtub. Step S7-1 of taking a breath in with the face out of the water surface, Step S7-2 of taking a breath out from the nose in the water, and Step S7-3 of carrying out training for the streamline swimming style are continuously performed for a required number of times (Step S7-4). The sequence may be interchanged. Performing Step S7-4 for the required number of times concludes the training, leading to END.

Once Step S7-4 is performed for the required number of times and the training carried out with the training tool 6 worn around the abdominal periphery 2 is sufficiently mastered to become confident, the training proceeds to the next Step S8. Although the location for performing this may be on land after getting out of the pool or in the water, in Step S8, each layer of the training tool 6 is loosened at any of the locations. Afterwards, as training for breathing in the drawing-in state, Step S9-1 of drawing-in inhalation with the face out of the water surface is performed. Next, Step S9-2 of drawing-in exhalation is performed while a breath is taken out from the nose in the water. Subsequently, the arms and legs are slowly extended in the drawing-in state to perform streamline Step S9-3. These are continuously performed for a required number of times (S9-4). The sequence may be interchanged. Performing Step S9-4 for the required number of times concludes the training, leading to END.

Once Step S9-4 is performed for the required number of times and the training carried out with the training tool 6 worn loosely around the abdominal periphery 2 is sufficiently mastered to become confident, the training proceeds to the next Step S10. In Step S10, first, since the training tool 6 is not worn around an abdominal periphery 2, the body sinks in the water for the amount. However, by releasing force in the body in the drawing-in state after taking a breath in and submerging the face in the water in a forceless state, the body can sufficiently float by the air that enters the lungs 8. As training for breathing in the forceless state, Step S11-1 of drawing-in inhalation with the face out of the water surface is performed. Next, Step S11-2 of drawing-in exhalation is performed while a breath is taken out from the nose in the water. Subsequently, the arms and legs are slowly extended in the drawing-in state to perform streamline Step S11-3. These are continuously performed for a required number of times (S11-4). The sequence may be interchanged, as necessary. Performing Step S11-4 for the required number of times concludes the training, leading to END.

The training of Fig. 8C is carried out after sufficiently carrying out the training of Fig. 8A and the training of Fig. 8B in phases to develop confidence. Accordingly, unlike swimming suddenly without wearing the training tool 6 around the abdominal periphery 2, the training of Fig. 8C is carried out with psychological confidence and composure, therefore allowing avoidance of a risk of panicking to drown in the water. Moreover, when anxiety is felt even a little, it is possible to carry out training by immediately returning to one step before, which is the step of carrying out training with the training tool 6 loosely worn, or two steps before, which is the training with the training tool 6 tightly wrapped and worn around the abdominal periphery 2 firmly. Therefore, the trainee 1 can continue carrying out training with a sense of security.

Additionally, the training of the steps of Fig. 8C can be carried out in a concentrated manner by narrowing down to contents that can only be performed in a swimming pool. Therefore, unlike the conventional swimming training method in which all the training items are taught all at once to give guidance only for a period during which a swimming pool can be used in swimming classes, thorough guidance can be given on floating while facing downward in the drawing-in state and the streamline swimming style sufficiently over time.

Accordingly, even when a school pool is scrapped, making the swimming classes difficult, only for the training of Fig. 8C, which can only be carried out in a pool, it is possible to use a publicly-operated pool or a privately-operated pool to carry out training, and the problem of being unable to have swimming classes due to the absence of a pool can be solved.

For the training tool 6 used for the training method according to the present invention, as described above, any materials, such as natural rubber and synthetic rubber, may be used as long as the training tool 6 in a longitudinal shape is made of elastic foam having buoyant force, stretchability, and flexibility. However, as the elastic foam, a material which is made of chloroprene rubber containing air and used for what is called wet suits is preferred.

Specifically, candidates include a rubber material that is made of a closed cell structure and has a thickness of 2.0 mm to 8.0 mm. Since this material has buoyant force required for achieving the object of the present invention, flexibility, and stretchability, it is only necessary to cut the fabric to have an external shape of a length of 300 mm to 1500 mm and a width of 50 mm to 400 mm and sew hook-and-loop fasteners to both end portions of the fabric so that both end portions can be overlapped and locked on the abdominal periphery of the trainee. The material is economical because it is only necessary to change the tightening force according to progress phase of the training.

As described in Non-patent Document 3, it is not easy for the trainee 1 as a beginner in swimming to voluntarily pull in the abdominal periphery 2 to achieve the drawing-in state. Accordingly, even when the trainee 1 as a beginner in swimming achieves the drawing-in state using the training tool 6, it is still not easy because a direction in which force easily develops in his/her arms when the trainee 1 tightly wraps around the abdominal periphery 2 with the training tool 6 using the arms' force is different from a tightening direction.

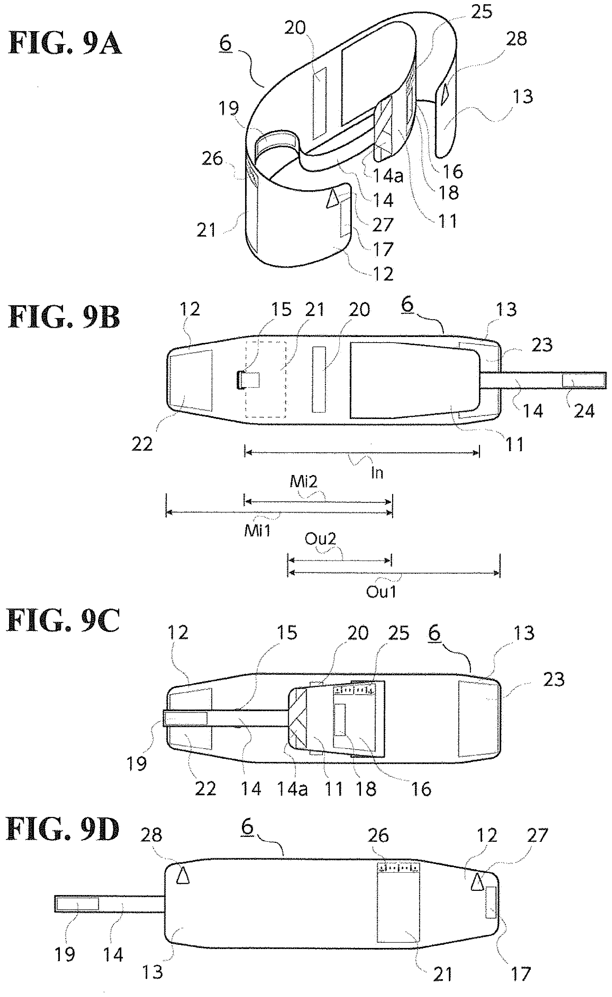

Therefore, as a structure of the training tool 6 that exerts the optimal tightening force, a structure illustrated in Figs. 9A to 9D is preferred. After the training tool 6 is worn on the body of the trainee 1, the training tool 6 forms into a streamlined smooth form that has less unevenness on an outer surface and traces the body shape in the drawing-in state. The training tool 6 is worn on a position at which the abdomen is pulled in from on a dotted line in contact with the ribs (ribs) of the trainee 1 and can tighten and secure the abdominal periphery 2 from the upper portion (ilium) of the pelvis 3 to the lower side of the tenth ribs 5 at the lowermost part of the ribs so as to lift the digestive organs 9 upward.

The training tool 6 includes a plurality of layers in longitudinal shapes for tightening an abdominal periphery and hook-and-loop fasteners. The plurality of layers have buoyant force, stretchability, and flexibility to enable the trainee 1 to tightly wrap the training tool 6 around the abdominal periphery 2 alone such that the length of the abdominal periphery 2 of the trainee 1 is reduced by 3% to 20% from the length of the abdominal periphery 2 at rest when the trainee 1 does not wear the training tool 6. The hook-and-loop fasteners are provided relative to surfaces of the respective layers. The training tool 6 is formed such that a count of layers on the abdomen side is more than a count of layers on the back side when tightly wrapped around the body, the respective layers are alternately overlapped from opposite directions and secured with the respective hook-and-loop fasteners, and the shrinking force of the respective layers collaborate to pull in the abdominal periphery of the trainee.

More specifically, a material made of rubber in a longitudinal shape that is made of elastic foam having buoyant force, stretchability, and flexibility and exhibits a form that fits the body shape is formed by a three-layer structure of a first layer 11, a second layer 12, and a third layer 13 as illustrated in Fig. 9A. In order to secure the respective layers after the abdominal periphery 2 is tightened, the hook-and-loop fasteners formed by a combination of loops and hooks sides are used. For the loops and hooks sides of the hook-and-loop fasteners, it is indifferent on which of the hook-and-loop fasteners serves as the loops side or which of the hook-and-loop fasteners serves as the hooks side. In this example, while a combination of one pair is illustrated, it may be interchanged and reversed.

In order to enable the trainee 1 alone to firmly tighten the abdominal periphery 2 by the tightening by the first layer 11, the second layer 12, and the third layer 13 and keep the drawing-in state, a belt 14 not having stretchability is provided at the center on another end of the first layer 11. Then, using a buckle 15 as a fulcrum, with the belt 14 and the buckle 15 working based on the principle of a pulley, the direction for tightly wrapping with the first layer 11 is inverted so as to be a direction opposite to the direction for tightly wrapping with the second layer 12, thereby being formed so that force to pull by his/her right hand and force to pull by his/her left hand act in an identical direction.

That is, it is configured such that only by pulling the second layer 12 by one hand, the motion and pulled force are transmitted to the first layer 11 via the belt 14, and the first layer 11 is also pulled together. Accordingly, the direction for pulling the first layer 11 and the direction for pulling the second layer 12 are opposite directions. Even when the direction for pulling is different from the direction that makes the trainee 1 easy to apply the arm's force based on the difference of the dominant arm of the trainee 1, it is possible to sufficiently tighten with less force based on the principle of a pulley.

Moreover, in order to avoid application of local force from the belt 14 to a connection portion of the first layer 11 when the belt 14 that does not stretch is pulled and result in breakage, a base of the belt 14 is reinforced by a reinforcing portion 14a having a shape that widens toward the end and attached so as to disperse the force in a width direction of the first layer 11. Even when the belt 14 that does not stretch is pulled, the force is evenly applied to the whole width of the stretching first layer 11, not causing breakage. The tightening force generated by reaction of the training tool 6 when it is wrapped around the abdominal periphery by stretching the respective layers does not directly become local digging force by the belt 14 to cause the trainee 1 to feel pain with the belt 14 digging into the abdominal periphery 2. A whole inner surface of the flexible first layer 11 can come in contact with and softly tighten the abdominal periphery 2 while acting as a cushion. That is, while the tightening force due to contact with a line causes the trainee 1 to feel intense pain, the tightening force due to contact with a surface is a gentle pressing force and does not cause the trainee 1 to feel pain.

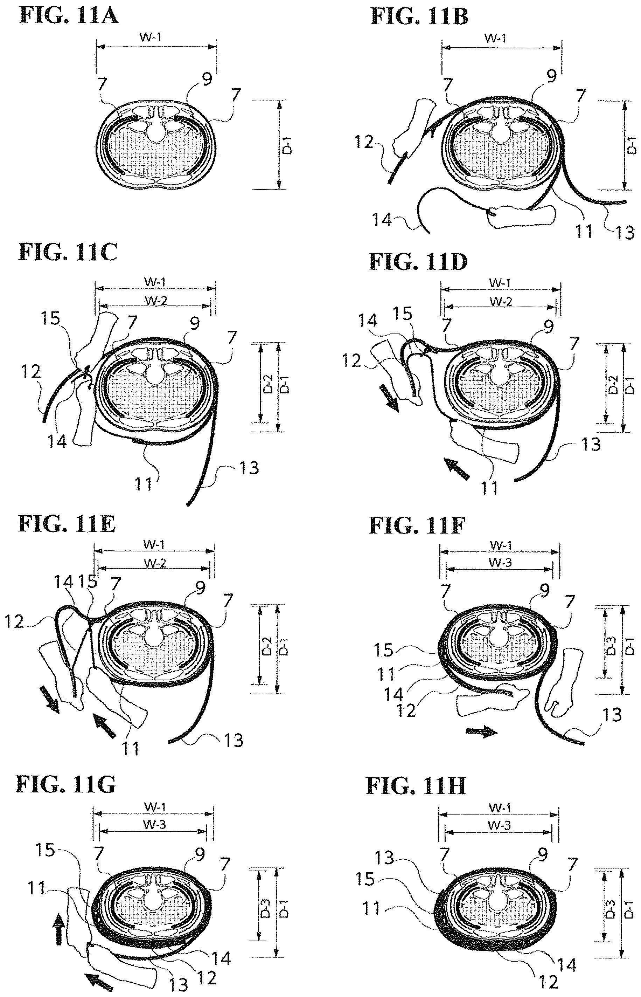

When the training tool 6 is used, as described later, in the order from Fig. 11A to Fig. 11H, the training tool 6 having a three-layered structure in Fig. 9 is wrapped and tightened around the abdominal periphery 2 of the trainee 1, and the abdominal periphery 2 is tightly wrapped around firmly and strongly with the training tool 6 so as to finally maintain the drawing-in state in 11H. By thus wrapping while stretching the training tool 6 around the abdominal periphery 2, the abdominal periphery 2 is tightened to have a breadth length changing from W-1 via W-2 to W-3 and a depth width changing from D-1 via D-2 to D-3.

First, Fig. 11A illustrates a cross-sectional surface of the abdominal periphery 2 around the navel of the trainee 1. The transverse abdominal muscles 7 play a role of a corset from both sides so as to protect the digestive organs 9. When the trainee 1 voluntarily tenses up the transverse abdominal muscles 7, the abdominal periphery 2 is pulled in to enter the drawing-in state.

With the drawing-in state maintained, a part, which is biased to the first layer 11 side, of the belt 14 attached to an end of the first layer 11 of the training tool 6 is gripped with the left hand, and an end portion of the second layer 12 is gripped with the right hand. While a right-and-left position is confirmed by the feel of a backbone marker 20 touching the backbone, the backbone marker 20 is brought into contact with the backbone such that the backbone marker 20 comes to a position that fits in the backbone of the back to achieve a state of Fig. 11B.

Next, while the buckle 15 attached to the second layer 12 is gripped with the right hand, the belt 14 is allowed to pass through the buckle 15 by the left hand to achieve a state of Fig. 11C.

A hook-and-loop fastener (loops side) 24 sewn at an end on the inner side of the belt 14 allowed to pass through the buckle 15 is stacked on a hook-and-loop fastener (hooks side) 22 sewn on the inner side of the second layer 12, allowing both to engage for securing. A pull 17 on a surface of the second layer 12 is grasped and pulled to a leftward direction by applying force in an arrow direction, and a pull 18 of the first layer 11 is gripped with the left hand and pulled by applying force in an arrow direction for approaching the buckle 15 to achieve a state of Fig. 11D.

When the end of the second layer 12 is strongly pulled in the arrow direction by the right hand, the belt 14 extends straight, enabling the first layer 11 to be pulled and stretched with more force than that when the first layer 11 is directly pulled by hand based on the principle of a pulley using the buckle 15 as a fulcrum. At this time, the belt 14 sewn to the first layer 11 is simultaneously strongly extended and enters a state of Fig. 11E in which the belt 14 extends completely straight.

In a state where the abdomen is strongly tightened by the shrinking force of the whole first layer 11, while a hook-and-loop fastener (loops side) 16 on an outer side of the first layer 11 and the hook-and-loop fastener (hooks side) 22 on the inner side of the second layer 12 are allowed to engage, the abdominal periphery 2 is covered with the first layer 11. By pulling the second layer 12, the first layer 11 is further pulled based on the principle of a pulley with the belt 14 as illustrated in Fig. 11F, enabling the left hand to release from the first layer 11. At this time, the abdominal periphery 2 is tightly wrapped around firmly with the first layer 11 and the second layer 12 so as to enter the drawing-in state.

In order to further strengthen the force for tightening the abdominal periphery 2 by the first layer 11 and the second layer 12, as illustrated in Fig. 11G, an end portion of the third layer 13 is gripped with both the right hand and the left hand, and force is applied in a clockwise direction, thereby allowing tightening further strongly.

By the procedure from Fig. 11A to Fig. 11G, a front side of the abdominal periphery 2 of the trainee 1 is tightened by the three layers of the first layer 11, the second layer 12, and the third layer 13, and the first layer 11 is covered with the second layer 12. Afterwards, while the pull 17 at the end portion of the second layer 12 is pulled and stretched by hand, a hook-and-loop fastener 21 (loops side) on the outer side of the second layer 12 and a hook-and-loop fastener 23 (hooks side) on the inner side of the third layer 13 are allowed to engage, and the whole is covered and secured with the third layer 13.

Thus, the training tool 6 utilizes the force of the belt 14 that does not stretch and the buckle 15 and firmly tightens the upper portion of the pelvis 3 of the trainee 1 in the drawing-in state over the swimwear by the shrinking force collaborated by the stretching three layers of the first layer 11, the second layer 12, and the third layer 13 to correct the posture of the pelvis 3 into an appropriate posture and maintain the posture. Since the front side of the abdominal periphery 2 is tightened from alternate directions as illustrated in Fig. 11H, it is possible to firmly tighten the front side of the abdominal periphery 2 and maintain the drawing-in state without the training tool 6 coming off an abdominal circumferential portion 2 even when the trainee 1 intensely moves in the water.

Thus, the abdomen side of the training tool 6 is formed into the three-layered structure with the first layer 11, the second layer 12, and the third layer 13, and the training tool 6 is formed such that buoyant force of an abdomen side front surface part is greater than the buoyant force of a back side front surface part when the trainee 1 wears the training tool 6. Accordingly, compared with a training tool that has the same total buoyant force as the training tool 6 in the posture of prone floating and has the same configuration on the abdomen side and the back side, the buoyant force on the abdomen side sinking in the water is greater than that on the back side, and therefore, the whole body is further pushed up from the abdomen side. The feel allows further having a greater mental sense of security.

Additionally, by forming the abdomen side of a training tool into a three-layered structure, for the tightening force for pulling in the abdomen and maintaining drawing-in, compared with the training tool 6 that has the same total buoyant force as the training tool 6 and has the same configuration on the abdomen side and the back side, the tightening force on the abdomen side becomes greater than that on the back, and therefore, the tightening force required for drawing-in can be obtained with a comfortable wearing feel.

As long as the buoyant force of the abdomen side front surface part is greater than the buoyant force of the back side front surface part when the training tool 6 is worn, similar operational advantages are provided even when the training tool 6 has a three-layered structure that does not include the belt 14 instead of the three-layered structure as described above, or when the training tool 6 has a two-layered structure or a two-layered structure without the belt 14.

For confirming the degree of the tightening force of the training tool 6, a first ruler 25 is provided on the outer side of the first layer 11, a second ruler 26 is provided on the outer side of the second layer 12, a first arrow 27 is provided at a leading end on the outer side of the second layer 12, and a second arrow 28 is provided at a leading end on the outer side of the third layer 13. The degree of tightening of the training tool 6 can be confirmed by looking at where the first arrow 27 and the second arrow 28 indicate on the first ruler 25 and the second ruler 26, respectively.

That is, the tightening degree by the training tool 6 in each training in the case where the training tool 6 is strongly wrapped and tightened around the abdominal periphery 2, the case where the tightening of the abdominal periphery 2 by the training tool 6 is loosened, and the case where the training tool 6 is removed from the abdominal periphery 2 can be confirmed by the position of each arrow on each ruler, and the degree of proficiency of the training can be recognized.

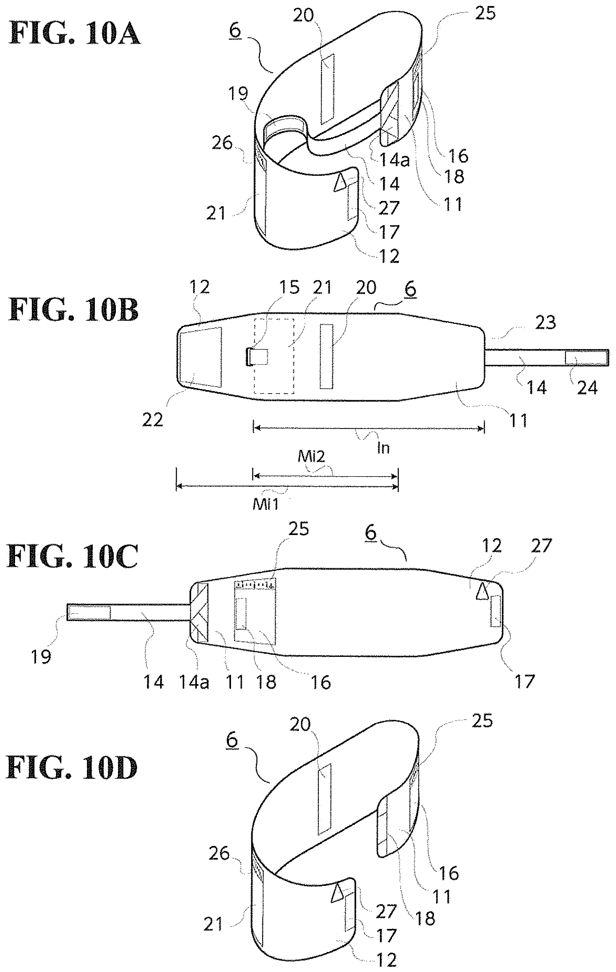

Note that in the present invention, as illustrated in the above-described embodiment, the training tool 6 is not limited to having a three-layered structure of the first layer 11, the second layer 12, and the third layer 13. The training tool 6 may be configured to have a two-layered structure that omits the third layer 13 and includes the first layer 11 and the second layer 12 as illustrated in Figs. 10A to 10C. In the training tool 6 having the two-layered structure, the same reference numerals are given to components and members identical to those of the above-described three-layered structure illustrated in Fig. 9, and the descriptions are omitted in the following description.

As illustrated in Figs. 10A and 10B, the training tool 6 having a two-layered structure is formed such that the belt 14 that does not have stretchability is provided at the center in the width direction of another end of the first layer 11, and the belt 14 and the buckle 15 act based on the principle of a pulley using the buckle 15 as a fulcrum.

That is, it is configured such that only by pulling the second layer 12 by one hand, the motion and pulled force are transmitted to the first layer 11 via the belt 14, and the first layer 11 is also pulled together. Accordingly, the direction for pulling the first layer 11 and the direction for pulling the second layer 12 are opposite directions. Even when the direction for pulling is different from the direction that makes the trainee 1 easy to apply the arm's force based on the difference of the dominant arm of the trainee 1, it is possible to sufficiently tighten with less force based on the principle of a pulley.

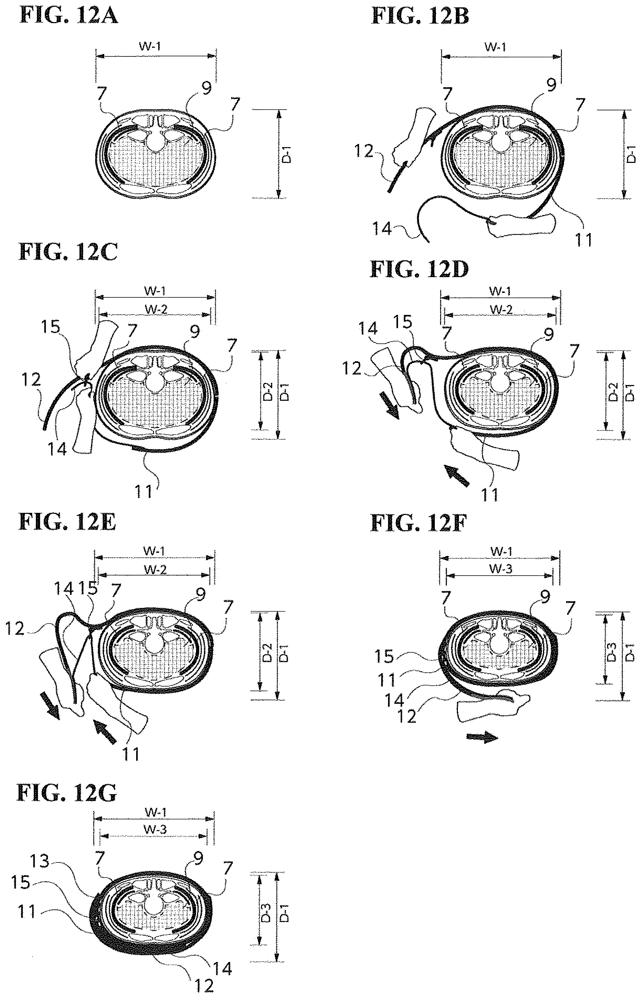

Similarly to the training tool 6 having a three-layered structure, when the training tool 6 composed of the two-layered structure of the first layer 11 and the second layer 12 is used, with the drawing-in state by his/her own body maintained, the trainee 1 grips a part, which is biased to the first layer 11 side, of the belt 14 attached to the end of the first layer 11 of the training tool 6 with the left hand and the end portion of the second layer 12 with the right hand as illustrated in Fig. 12B. While the right-and-left position is confirmed by the feel of the backbone marker 20 touching the backbone, the backbone marker 20 is brought into contact with the backbone such that the backbone marker 20 comes to a position that fits in the backbone of the back to achieve a state of Fig. 12B.

As illustrated in Fig. 12C, the hook-and-loop fastener (loops side) 24 sewn at the end on the inner side of the belt 14 allowed to pass through the buckle 15 is stacked on the hook-and-loop fastener (hooks side) 22 sewn on the inner side of the second layer 12, allowing both to engage for securing.
The pull 17, in which his/her finger can be hooked, on the surface of the second layer 12 is grasped and pulled to the leftward direction by applying force in an arrow direction, and the pull 18, in which his/her finger can be hooked, on the surface of the first layer 11 is grasped with the left hand and pulled by applying force in an arrow direction for approaching the buckle 15 to achieve a state of Fig. 12D.

When the end of the second layer 12 is strongly pulled in the arrow direction by the right hand, first, the belt 14 extends straight, enabling the first layer 11 to be pulled and stretched with more force than that when the first layer 11 is directly pulled by hand based on the principle of a pulley using the buckle 15 as a fulcrum. At this time, the belt 14 sewn to the first layer 11 is simultaneously strongly extended and enters a state of Fig. 12E in which the belt 14 extends completely straight.

In a state where the abdomen is strongly tightened by the shrinking force of the whole first layer 11, while the hook-and-loop fastener (loops side) 16 on the outer side of the first layer 11 and the hook-and-loop fastener (hooks side) 22 on the inner side of the second layer 12 are allowed to engage, the abdominal periphery 2 is covered with the first layer 11. By pulling the second layer 12, the first layer 11 is further pulled based on the principle of a pulley with the belt 14 as illustrated in Fig. 12F, enabling the left hand to release from the first layer 11. At this time, the first layer 11 and the second layer 12 collaborate to tightly wrap around the abdominal periphery of the trainee firmly such that the abdominal periphery 2 enters the drawing-in state.

In order to further strengthen the force for tightening the abdominal periphery 2 by the first layer 11 and the second layer 12, as illustrated in Fig. 12G, the end portion of the second layer 12 is gripped with both the right hand and the left hand, and force is applied in a counterclockwise direction of the arrow, thereby allowing tightening further strongly.

Basically, the training tool 6 may have a two-layered structure, a three-layered structure, or a structure having any number of layers. It is only necessary for the training tool 6 to tightly wrap around an abdominal circumferential portion of the trainee 1 firmly and maintain the drawing-in state of the trainee 1.

Since those proficient in swimming do not have to think about measures against fear, it is only necessary to maintain the drawing-in state by the training tool 6 even if the training tool 6 has no buoyant force.

As long as the drawing-in state can be kept by the training tool 6, even when the intention of the trainee 1 to perform drawing-in recedes, it is possible to carry out training with the drawing-in state kept by the training tool 6.

By the procedure from Fig. 12A to Fig. 12G, the front side of the abdominal periphery 2 of the trainee 1 is tightened by the first layer 11 and the second layer 12, and a front face abdomen side of the first layer 11 is covered with the second layer 12. Afterwards, while the pull 17 at the end portion of the second layer 12 is pulled and stretched by hand, the hook-and-loop fastener 21 (loops side) on the outer side of the first layer 11 and the hook-and-loop fastener 23 (hooks side) on the inner side of the second layer 12 are allowed to engage. Since the abdominal periphery front face side is covered with the two overlapped layers, the abdominal periphery is tightly wrapped around and secured by both layers so as to have buoyant force is greater than that of the layer on the back side.

Thus, the training tool 6 utilizes the force of the belt 14 that does not stretch and the buckle 15 and firmly tightens the upper portion of the pelvis 3 of the trainee 1 in the drawing-in state over the swimwear by the shrinking force collaborated by the stretching first layer 11 and the second layer 12 to correct the posture of the pelvis 3 into an appropriate posture and maintain the posture. Since the front side of the abdominal periphery 2 is tightened from alternate directions as illustrated in Fig. 12G, it is possible to firmly tighten the front side of the abdominal periphery 2 and maintain the drawing-in state without the training tool 6 coming off the abdominal circumferential portion 2 even when the trainee 1 intensely moves in the water. Therefore, the two-layered structure provides similar operational advantages to the three-layered structure.

As long as the buoyant force of the abdomen side front surface part is greater than the buoyant force of the back side front surface part when the training tool 6 is worn and as long as the abdominal periphery is tightened in a similar manner, similar operational advantages, such as buoyant force given to the trainee 1 and maintaining the drawing-in state, are provided even in the following cases. The cases include a case where the training tool 6 has a two-layered structure that does not include the belt 14 or the buckle 15 as illustrated in Fig. 10D instead of the two-layered structure having the belt 14 and the buckle 15 as described above, and a case where the training tool 6 has a layered structure of three or more layers or a three-layered structure without the belt 14.

For confirming the degree of the tightening force of the training tool 6, the first ruler 25 is provided on the outer side of the first layer 11, and the first arrow 27 is provided at the leading end on the outer side of the second layer 12. The degree of tightening of the training tool 6 can be confirmed by looking at where the first arrow 27 indicates on the first ruler 25.

Incidentally, in the training tool 6 having a three-layered structure illustrated in Fig. 9, the training tool 6 enables the three layers of the stretching first layer 11, second layer 12, and third layer 13 to collaborate.

Alternatively, in the training tool 6 having a two-layered structure illustrated in Fig. 10, the two layers of the stretching first layer 11 and second layer 12 are allowed to collaborate, the force of the belt 14 that does not stretch and the buckle 15 is utilized based on the principle of a pulley, and the abdomen is firmly tightened by the shrinking force as reaction of the stretching parts. Therefore, calculation of the tightening force is not easy.

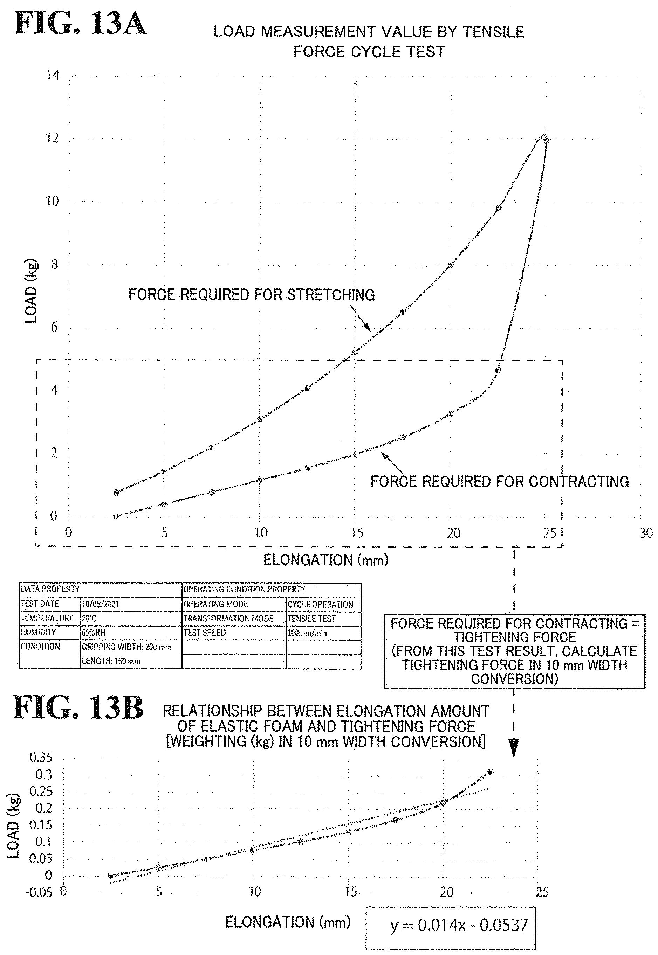

Therefore, Fig. 13 shows the result of measurement of a sample of elastic foam rubber actually used for the training tool 6.

Fig. 13A illustrates "load measurement value by tensile force cycle test." As measuring conditions, a material having a gripping width of 200 mm, a length of 150 mm, and a thickness of 3 mm, a temperature of 20°C, a humidity of 65% RH, and a test speed of 100 mm/min are used. For the force required for stretching up to 250 mm in increments of 25 mm and the force required for contracting from 250 mm in increments of 25 mm, loads were measured by the "tensile force cycle test."

Fig. 13B illustrates "relationship between elongation amount of elastic foam and tightening force." The force for stretching and the force for contracting are not identical from the physical properties of rubber, therefore leading to the force for contracting is equal to tightening force. The "relationship between elongation amount of elastic foam and tightening force" illustrated in fig. 13 represents a load (kg) in 10 mm width conversion.

For the definition of theoretical tightening force of the training tool 6 and the tightening force, a circumference of the abdominal circumferential portion 2 of the trainee 1 is denoted as "W-1," a circumference of the abdominal circumferential portion 2 in the drawing-in state is denoted as "W-2," and in the length in the longitudinal direction of the training tool 6 illustrated in Fig. 10B, a length from the leading end of the first layer 11 to the buckle 15 of the second layer 12 is denoted as "In," a length from the leading end of the second layer 12 to the attaching position of the first layer 11 is denoted as "Mi1," and a length from the leading end of the third layer 13 to the end of the hook-and-loop fastener 21 of the second layer 12 is denoted as "Ou1." When the trainee 1 with the circumference "W-1" of the abdominal periphery 2 of 75 cm performs drawing-in to have the circumference "W-2" of the abdominal periphery 2 of 69.75 cm in which the abdomen is drawn in by approximately 7%, the theoretical tightening force of the training tool 6 in M size is the sum of the tightening force of the first layer (5.2 kg) + the tightening force of the second layer (1.3 kg) + the tightening force of the third layer (2.4 kg), resulting in the sum total of 8.9 kg.

Next, the buoyant force of the training tool 6 will be described.

The buoyant force of the training tool 6 was calculated by the following method based on the Archimedes' principle.

The buoyant force of an object is expressed by the calculation formula: buoyant force = volume × fluid density × acceleration due to gravity. The force of an object to float is expressed by buoyant force - gravity. The force of the training tool 6 to float is expressed by buoyant force = volume of the training tool 6 × acceleration due to gravity × (specific gravity of water - density of the training tool 6).

The density of the elastic foam used for the training tool 6 is 266.66 (kg/m³). The volume of the training tool 6 in M size is 0.000618 (m³), and the force to float is 4.44 [N].

The density of a person is said to be approximately 920 [kg/m³] to 1060 [kg/m³]. Well-muscled types have difficulty floating, medium-built types float, and obese types float quite easily.

Theoretically, auxiliary buoyant force required for a person with a bodily weight of 60 kg in slightly well-muscled types (assuming a density of 970) to float in water in a state where residual air of 2000 cc remains in his/her lungs is 5.1 N.

For reference, since the buoyant force of an empty 500 ml plastic bottle is approximately 4.6 (N), it may be considered that the buoyant force of the training tool 6 in M size is approximately the same as the buoyant force of the empty 500 ml plastic bottle.

In the drawing-in state, in the order from Fig. 11A to Fig. 11H or from Fig. 12A to Fig. 12H, the abdominal periphery 2 centered on the navel of the trainee 1 from the upper portion of the pelvis 3 to the bottom of the tenth ribs 5 is covered by tightly wrapping while stretching each of the first layer 11, the second layer 12, and the third layer 13 of the training tool 6. Then, each layer of the training tool 6 contracts as reaction of stretching and tightly wraps around and covers the abdominal periphery 2 by the tightening force exceeding 8 kg as a whole. By wearing and tightly wrapping the training tool 6 around the abdominal periphery 2 strongly, even when the consciousness of the trainee 1 forgets to maintain drawing-in, the abdominal periphery 2 is tightened by the tightening force of the training tool 6, the drawing-in state is continuously maintained, and the trainee 1 is forced to constantly become conscious of the training tool 6.

When the trainee 1 gets in the water of a pool with the training tool 6 tightly wrapped and worn around the abdominal periphery 2, the whole body of the trainee 1 receives water pressure. Since the water pressure tightens the body and the training tool 6 is loosened for the amount in some cases, the training tool 6 is retightened again in the water when it is loosened.

In the water, the training tool 6 has buoyant force as many as 4 (N) and allows the trainee 1 to sufficiently float in the water. Therefore, once the training tool 6 is tightly wrapped, the fear of drowning in the water is substantially reduced even when the trainee 1 becomes less conscious of maintaining the drawing-in state and loses his/her concentration.

As described above, only by performing drawing-in, the digestive organs 9 and the diaphragm 10 rise to the head side, and the pelvis floor muscle group lifts up to the head side to stabilize the pelvis 3.

When the trainee 1 extends the arms to perform arm extension while keeping the drawing-in state in the pool water, the position of the center of gravity moves to the head side by the weight of the arms.

Moreover, since the trainee 1 wears the training tool 6 at the position from the bottom of the tenth ribs 5 to the upper portion of the pelvis 3, the drawing-in state is maintained, the digestive organs 9 move to the head side, and the center of buoyancy comes further closer to the center of gravity by the buoyant force of the training tool 6 itself.

The mechanism of movement of the center of buoyancy and the center of gravity by the training according to the present invention will be described.

In the present invention, the motion of contracting collateral muscles, such as transverse abdominal muscles 7 to pull in the abdominal periphery 2 voluntarily and consciously (hereinafter referred to as drawing-in) by the trainee 1 as a beginner in swimming enables the digestive organs 9 to move to the head side and the center of gravity to also move to the head side by allowing the lateral abdominal muscles including the transverse abdominal muscles 7 to act as a corset that tightens the digestive organs 9, such as the stomach, small intestine, and large intestine as internal organs and by contracting these lateral abdominal muscles. Furthermore, the drawing-in motion causes the diaphragm 10 to rise to the head side by pulling in the abdomen. When air is inhaled throughout the lungs with consciousness as if the lower rib cage spreads to the right and left in this state, the lower rib cage spreads to right and left, and the air is stored in the lower side (pelvis side) of the lungs 8, enabling the position of the center of buoyancy to move to the leg side. Accordingly, the center of gravity and the center of buoyancy of the body come close to one another, making it easier to float horizontally in the water. The trainee 1 can sufficiently experience the posture of floating horizontally in the water by the whole body and memorize the exercise in his/her cerebellum.

The training tool 6 has fastening force for keeping the drawing-in state and the buoyant force that helps take the posture of floating horizontally by his/her own power. Accordingly, as long as the training tool 6 is worn, the posture is held even in the water, the lower body does not extremely sink, and air can be inhaled throughout the lungs 8 when the face gets out of the water surface.

During inhalation with drawing-in held, in a state where the diaphragm 10 relaxes and moves to the head side, the external intercostal muscles contract, the thoracic cavity spreads, and air is inhaled without contracting the diaphragm 10 or moving the diaphragm 10 to the pelvis 3 side (see Fig. 15C).

During exhalation with drawing-in held, the external intercostal muscles relax, the thoracic cavity narrows, and air is exhaled without relaxing the diaphragm 10 or moving the diaphragm 10 to the head side (see Fig. 16C).

Thus performing the swimming breathing can stabilize the pelvis 3 and keep a good posture. Accordingly, with a floating state kept, it is possible to swim comfortably without using labored and useless force, and the posture of extending after paddling by hands as the streamline swimming style improves, making it easier to advance.

Once the trainee 1 thus wears the training tool 6 and becomes able to swim under the swimming breathing method, swimming with the tightening of each layer of the training tool 6 loosened to experience the change in the body balance, swimming with the training tool 6 firmly tightened again, and the like are repeated. When the trainee 1 becomes able to swim confidently with the training tool 6 worn, finally, he/she removes the training tool 6 and carries out training of the streamline swimming style in the drawing-in state.

When the trainee 1 feels anxiety or wants to reconfirm after removing the training tool 6 from the body and swimming in the streamline swimming style under the swimming breathing method learned with the training tool 6 worn to experience the change in the body balance, swimming with each layer of the training tool 6 firmly tightened again, swimming with each layer of the training tool 6 loosened, and the like are repeated. When the trainee 1 finally becomes able to swim confidently without wearing the training tool 6, he/she masters a drawing-in swimming style according to the present invention.

Twenty-two trainees between the ages of 5 and 57 as beginners in swimming actually carried out training with the training tool 6 worn according to the present invention around the abdominal periphery 2, and the respective trainees were asked to give their feedback on the swimming training carried out with the training tool 6 worn.

Table 2 shows the feedback about each of three states including a case of not wearing, a case of wearing, and a case of swimming without wearing it after carrying out training by swimming with the training tool 6 worn. As shown in Table 2, while there is no feedback that they felt fear of drowning in the water. The feedback given is that the relationship between wearing the training tool and swimming was appropriately understood. The trainees all realize the effects of the training carried out with the training tool 6 worn.

**[Table 2]**

| | Attribute | | Feedback | Distance by streamlined gliding (m) | | |
|---|---|---|---|---|---|---|
| | Age | Sex | | Not wearing | Wearing | Not wearing after wearing |
| 1 | 5 years old | Male | I float so well and want to wear it all the time. It is removed, but it feels like I'm wearing it. | - | - | - |
| 2 | 6 years old | Male | Seems like I'm floating and moving well for some reason. | - | - | - |
| 3 | 7 years old | Male | I feel very safe because my body floats. I'm not scared while I'm wearing it. | - | - | - |
| 4 | 7 years old | Male | I float and find it easy to swim with. When I take it off, I feel cold for a moment, but still, I find it easy to swim with. | - | - | - |
| 5 | 8 years old | Female | I float very well and find it easy to swim with. When I took it off, it was a little cold, but I was able to swim faster. | - | - | - |
| 6 | 9 years old | Female | It feels like the corset is still attached even after it is removed. My body moved forward swiftly. My 15 m time record was 1.3 seconds faster after I wore it. | - | - | - |
| 7 | 9 years old | Male | When I remove it, it feels like my belly is pulled in and stiffened with an adhesive. My 15 m time record was 2.5 seconds faster after I wore it. | - | - | - |
| 8 | 9 years old | Female | It is very easy to swim with. I'm not sinking, can swim faster, and feel so good. | 5 | 7 | 7 |
| 9 | 10 years old | Male | It feels like I'm still wearing the corset. I was able to swim faster when I took it off My 15 m time record was 1 second faster after I wore it. | - | - | - |
| 10 | 10 years old | Male | It felt tight, but it made me float and was easy to swim with. I was able to find the posture even after removing it. | 6 | 9 | 9 |
| 11 | 11 years old | Male | It feels really good. It is easy to swim with. I want to wear it all the time. | 7 | 10 | 9 |
| 12 | 13 years old | Female | It makes me swim very fast. The feeling of floating is easy to understand. I want it. | 8 | 11 | 11 |
| 13 | 14 years old | Female | I floated, and it made me move very easily. I was surprised that the same feeling remained even after I took it off. | - | - | - |
| 14 | 15 years old | Female | The feeling around my belly remains, and it is impressive to feel like I'm wearing it even after removing it. I like the feeling that my body moves swiftly even after it is removed and not under any resistance. | 9 | 13 | 12 |
| 15 | 15 years old | Female | The position of my lower-back comes higher without my knowing it. My body wobbled a little when I rolled, but by keeping my body from wobbling, I was able to control my body core very well when I took it off. | - | - | - |
| 16 | 17 years old | Male | Since the good feeling remains, I want to use it for warming up before a swimming match. | - | - | - |
| 17 | 18 years old | Female | The feeling of the tightened belly is very easy to understand. The wearing feeling remains and my body floats even after I take it off. I learned a so-called good position. | - | - | - |
| 18 | 40 years old | Female | It allows my body to learn the floating posture. I like it because I can kick, and it feels like I take the posture, float, and swim by myself rather than being forced to float. | 7 | 9 | 8 |
| 19 | 40 years old | Male | I can see that I'm swimming in a good state. Since the body shape rather than the feeling remains after removal, I can swim very smoothly. It's nice that it stays in my body. | 8 | 11 | 10 |
| 20 | 50-something | Female | I learned that I should swim in this position. I learned the way I breathe with my belly pulled in even after taking it off. | 7 | 9 | 8 |
| 21 | 50-something | Male | I felt tight when I tightened it, but it changed as I became able to move my ribs and take air in. More importantly, I learned the floating posture very well when I removed it. | 7 | 9 | 8 |
| 22 | 57 years old | Female | I could see myself floating very much. I floated more than usual even after I took it off. I've never felt it before. | - | - | - |

### DESCRIPTION OF REFERENCE SIGNS

- 1:: Trainee (beginners in swimming)
- 2:: Abdominal periphery
- 3:: Pelvis
- 4:: Swimwear
- 5:: Tenth ribs
- 6:: Training tool
- 7:: Transverse abdominal muscles
- 8:: Lungs
- 9:: Digestive organs
- 10:: Diaphragm
- 11:: First layer
- 12:: Second layer
- 13:: Third layer
- 14:: Belt
- 14a:: Reinforcing portion that widens toward the end
- 15:: Buckle
- 16:: Hook-and-loop fastener (loops side)
- 17:: Pull
- 18:: Pull
- 19:: Hook-and-loop fastener (hooks side)
- 20:: Backbone marker
- 21:: Hook-and-loop fastener (loops side)
- 22:: Hook-and-loop fastener (hooks side)
- 23:: Hook-and-loop fastener (hooks side)
- 24:: Hook-and-loop fastener (loops side)
- 25:: First ruler
- 26:: Second ruler
- 27:: First arrow
- 28:: Second arrow
- S1:: Wear training tool
- S2:: Perform drawing-in & tighten training tool
- S3-1:: Perform drawing-in breathing (inhalation)
- S3-2:: Perform drawing-in breathing (exhalation)
- S3-3:: Continuation
- S4-1:: In bathtub water
- S4-2:: Perform drawing-in & retighten training tool
- S5-1:: Perform drawing-in breathing (inhalation)
- S5-2:: Perform drawing-in breathing (exhalation)
- S5-3:: Continuation
- S6-1:: In pool water
- S6-2:: Perform drawing-in & retighten training tool
- S7-1:: Perform drawing-in breathing (inhalation)
- S7-2:: Perform drawing-in breathing (exhalation)
- S7-3:: Perform streamline
- S7-4:: Continuation
- S8:: Perform drawing-in & loosen training tool
- S9-1:: Perform drawing-in breathing (inhalation)
- S9-2:: Perform drawing-in breathing (exhalation)
- S9-3:: Perform streamline
- S9-4:: Continuation
- S10:: Perform drawing-in & remove training tool
- S11-1:: Perform drawing-in breathing (inhalation)
- S11-2:: Perform drawing-in breathing (exhalation)
- S11-3:: Perform streamline
- S11-4:: Continuation

## Claims

1. A training method comprising:
a step of contracting a lateral abdominal muscle including a transverse abdominal muscle to pull in an abdominal periphery voluntarily by a trainee;
a step of covering the abdominal periphery pulled in voluntarily by the trainee from an upper portion of a pelvis to a bottom of a tenth rib by tightly wrapping while stretching a training tool in a longitudinal shape having stretchability and flexibility; and
a step of carrying out training while maintaining a state where the abdominal periphery is pulled in by shrinking force of the training tool.

2. The training method according to claim 1, wherein
the training tool has contractile force for tightening such that a length of the abdominal periphery on a navel of the trainee becomes 3% to 20% shorter than a length of the abdominal periphery in a resting state.

3. The training method according to claim 1 or 2, wherein
the training tool is formed to have buoyant force on an abdomen side front surface part larger than buoyant force on a back side front surface part.

4. The training method according to claim 1, further comprising:
carrying out breathing training that alternately performs:
a step of taking a breath in above a water surface by contracting a diaphragm and widely spreading a lower rib cage while maintaining a state where the abdominal periphery is pulled in by shrinking force of the training tool, and
a step of taking a breath out in water while maintaining a state where the abdominal periphery is pulled in by shrinking force of the training tool.

5. The training method according to claim 1, further comprising:
a step of contracting the lateral abdominal muscle including the transverse abdominal muscle to pull in the abdominal periphery voluntarily by the trainee on land, and tightly wrapping around the abdominal periphery ranging from a bottom of a tenth rib of an abdomen pulled in to an upper portion of a pelvis with the training tool in a longitudinal shape made of elastic foam having buoyant force, stretchability, and flexibility;
a step of getting in water in a state where the abdominal periphery is tightly wrapped around with the training tool,
a step of contracting the lateral abdominal muscle including the transverse abdominal muscle to pull in an abdomen again voluntarily by the trainee after entering a state where water pressure is applied to the abdominal periphery in water and retightening the training tool, and
carrying out training in water in a state where the abdominal periphery is tightly wrapped around with the training tool.

6. The training method according to claim 1, further comprising:
alternately performing:
a step of carrying out a first horizontal posture training in which horizontal posture is taken in water with the abdominal periphery tightened with the training tool, and
a step of carrying out a second horizontal posture training in which horizontal posture is taken in water with tightening of the abdominal periphery by the training tool loosened following the first horizontal posture training.

7. The training method according to claim 1, further comprising:
alternately performing:
a step of carrying out a first horizontal posture training in which horizontal posture is taken in water with the abdominal periphery tightened with the training tool, and
a step of carrying out a second horizontal posture training in which the training tool is removed from the abdominal periphery following the first horizontal posture training, and horizontal posture is taken in water while the lateral abdominal muscle including the transverse abdominal muscle is tightened without the training tool in water.

8. A training tool in a longitudinal shape having stretchability and flexibility that tightly wraps around an abdominal periphery from an upper portion of a pelvis of a trainee to a bottom of a tenth rib, wherein
the training tool has contractile force for tightly wrapping around an abdominal circumferential portion of the trainee such that a length of the abdominal periphery when the training tool is worn around the abdominal periphery of the trainee is reduced by 3% to 20% from a length of the abdominal periphery of the trainee at rest who does not wear the training tool.

9. The training tool according to claim 8, wherein
the training tool is made of elastic foam having buoyant force, stretchability, and flexibility.

10. The training tool according to claim 8, wherein
the training tool has an external shape of a length of 300 mm to 1500 mm, a width of 50 mm to 400 mm, and a thickness of 2 mm to 8 mm.

11. The training tool according to claim 8, comprising:
a plurality of layers in a longitudinal shape having stretchability and flexibility; and
a hook-and-loop fastener provided relative to a surface of each layer, wherein
the training tool is formed such that a count of layers on an abdomen side is more than a count of layers on a back side when tightly wrapped around a body,
the respective layers are alternately overlapped from opposite directions and secured with the respective hook-and-loop fasteners, and
shrinking force of the respective layers collaborate to pull in the abdominal periphery of the trainee.

12. The training tool according to claim 11, wherein
at least one layer has a leading end to which one end of a non-contractile elongated belt is secured,
the belt has another end that is allowed to pass through a buckle attached to another layer adjacent to the layer, and
when a leading end of another layer is pulled, the layer is also pulled using the buckle as a fulcrum, allowing both layers to cooperate to tightly wraps around the abdominal circumferential portion.

13. The training tool according to claim 8 or 9, further comprising:
a ruler and an arrow for indicating a tightening degree of the abdominal periphery of the trainee.

14. The training tool according to claim 8, further comprising:
a backbone marker that comes into contact with a backbone of the trainee, the backbone marker projecting on the inner side of a center portion in a longitudinal direction.

15. The training tool according to claim 8, wherein
the training tool has buoyant force applied on a front abdomen side of the trainee by each layer larger than buoyant force applied on a back side.
